# EUROPÄISCHE PATENTSCHRIFT

(11) **EP 3 129 301 B1**
(45) Veröffentlichungstag und Bekanntmachung des Hinweises auf die Patenterteilung: **04.11.2020**
(21) Anmeldenummer: 15713795.1
(22) Anmeldetag: 08.04.2015
(51) Int. Cl.: B65D 30/08, B65D 30/20, B65D 33/02

(54) **SACK MIT VLIES-MATERIAL UND VERFAHREN ZU DESSEN HERSTELLUNG**
BAG WITH NONWOVEN MATERIAL AND MANUFACTURING METHOD THEREOF
SAC EN MATÉRIAU NON-TISSÉ ET SON PROCÉDÉ DE FABRICATION

(30) Priorität: 08.04.2014 DE 102014105018
(43) Veröffentlichungstag der Anmeldung: 15.02.2017
(73) Patentinhaber: Windmöller & Hölscher KG, 49525 Lengerich/Westf. (DE)
(72) Erfinder: KÖHN, Uwe, 49078 Osnabrück (DE); HAWIGHORST, Thomas, 49205 Hasbergen (DE); VUTZ, Jürgen, 48268 Greven (DE); HERSCHBACH, Christof, 48157 Münster (DE); SCHNEIDER, Bernd, 49084 Osnabrück (DE)
(86) Internationale Anmeldenummer: PCT/EP2015/057591
(87) Internationale Veröffentlichungsnummer: WO 2015/155220

(56) Entgegenhaltungen:
- WO-A1-2006/125585
- DE-A1-102007 018 579
- DE-A1-102009 036 556
- US-A- 4 297 402
- US-A1- 2010 150 479
- US-A1- 2010 260 444

## Beschreibung

Die vorliegende Erfindung betrifft einen Sack zum Portionieren, Schützen, Lagern und/oder Transportieren von wenigstens einem Packgut gemäß den Merkmalen des Anspruchs 1. Dabei ist es bei dem Sack vorgesehen, dass zumindest ein Packmittel aus Packstoff dazu dient, das Packgut zu umschließen und/oder zusammen zu halten, wobei das Packmittel zumindest einlagig ist und einen Schlauchstückbereich mit einer Längserstreckung aufweist. Ferner weist das Packmittel eine Innen- und eine Außenwand auf, wobei die Innenwand zum Packgut hin gerichtet ist. Der zuvor erwähnte Schlauchstückbereich weist ein erstes Ende auf, welches als Bodenbereich des Sacks ausgeformt ist und ein zweites Ende, welches am ersten Ende gegenüberliegend am Schlauchstückbereich angeordnet ist und als Kopfbereich ausgestaltet ist.

Aus dem Stand der Technik sind diverse Säcke für Abpackgüter bekannt. So offenbart z. B. die Druckschrift GB 1 258 303 einen Sack, der insbesondere als Seitenfaltsack ausgestaltet ist und als Packstoff Papier oder Plastik aufweisen kann. Auch ist es denkbar, dass dieser Sack aus gekreuzten Plastikfolien herstellbar ist. Eine weitere Anforderung an die Säcke aus dem Stand der Technik ist es, dass diese schnell zu befüllen sind, was heute in der Regel maschinell erfolgt. Aus diesem Grund ist es von Vorteil, wenn die Säcke eine Luftdurchlässigkeit aufweisen, damit das Packgut möglichst schnell und homogen in den Sack einfüllbar ist. Zu diesem Zweck ist es häufig vorgesehen, dass die Lagen des Packmittels luftdurchlässig ausgestaltet sind, was z. B. durch eine Perforation oder Nadelung der Lagen erfolgen kann. Um trotzdem das Packgut vor Feuchtigkeit zu schützen, können zusätzliche Lagen vorgesehen sein, die zwar luftdurchlässig sind, jedoch eine Feuchtigkeitssperre darstellen. Aus der Druckschrift WO 2005/012121 A1 ist bspw. ein derartiger Zementsack offenbart.

Zusätzlich müssen die Säcke jedoch auch weiteren Anforderungen an die Lagerung und den Transport des Packguts angepasst sein, so dass das Packgut grundsätzlich optimal geschützt im Sack angeordnet ist. Dabei spielt der Preis des Sacks eine wesentliche Rolle, da bekanntermaßen die Käufer des Packguts kein Interesse an der Verpackung, sondern an dem Packgut selber haben und der Sack teilweise im Verhältnis zum Packgut einen wesentlichen und relevanten Preis darstellt. Insofern ist es wünschenswert, einerseits einen technisch anspruchsvollen Sack bereitzustellen und andererseits einen extrem kostengünstigen Sack.

Ferner sind aus den Schriften US 2010/0150479 A1, US 4,297,402 und DE 10 2007 018 579 A7 jeweils Säcke mit einer mehrlagigen Seitenwand bekannt, wobei zumindest eine Lage ein Vliesmaterial aufweist. Auch in der DE 10 2009 036 556 A1 wird ein Sack gezeigt, der zumindest teilweise Kunststoffvliesmaterial umfasst. Besondere Seitenfaltensäcke gehen aus den Druckschriften US 2010 / 026044 A1 und WO 2006 / 125585 A1 hervor.

Damit ist es Aufgabe der vorliegenden Erfindung einen Sack sowie ein Herstellverfahren für einen derartigen Sack und eine Anlage zur Herstellung eines solchen Sacks bereitzustellen, die zumindest teilweise die zuvor genannten Nachteile überwinden. Insbesondere ist es eine Aufgabe der vorliegenden Erfindung, einen kostengünstigen Sack bereitzustellen, der für unterschiedliche Packgüter zum Schützen, Lagern und/oder Transportieren geeignet ist. Ferner ist es eine weitere Aufgabe der vorliegenden Erfindung einen derartigen Sack kostengünstig herstellen zu können, was idealerweise auf einer entsprechenden Anlage zur Herstellung eines Sacks erfolgen soll.

Die vorliegende Aufgabe wird durch einen Sack mit den Merkmalen des Anspruchs 1, insbesondere aus dem kennzeichnenden Teil, gelöst. Ebenfalls wird zur Lösung der Aufgabe ein Herstellverfahren für einen Sack mit den Merkmalen des Anspruchs 12 vorgeschlagen. In den abhängigen Vorrichtungs- und Verfahrensansprüchen sind bevorzugte Weiterbildungen der Erfindung aufgeführt. Merkmale, die zu dem erfindungsgemäßen Sack, dem erfindungsgemäßen Herstellverfahren und/oder zur Anlage zur Herstellung des Sacks offenbart werden, gelten dabei auch jeweils für das erfindungsgemäße Herstellverfahren und/oder die Anlage zur Herstellung des Sacks und umgekehrt. Außerdem kann das erfindungsgemäße Herstellverfahren aus Anspruch 12 mit einer Anlage zur Herstellung des Sacks ausgeführt werden. Außerdem ist durch das erfindungsgemäße Herstellverfahren eines Sacks und die Anlage zur Herstellung des Sacks auch der erfindungsgemäße Sack selber herstellbar.

Im vorliegenden Text wird unter dem Begriff "Sack" jeglicher Sack, unabhängig vom Material, gemeint ist, ob Papier, Folie, Gewebe oder eine Kombination daraus, verstanden. Auch umfasst der Begriff "Sack" einen Beutel oder eine Tasche. Dabei kann der Sack zumindest ein oder zwei verschlossene Enden aufweisen. Zusätzlich ist es denkbar, dass an dem Sack angeformte oder verbundene und daran befestigte Griffelemente vorgesehen sind, um den Sack besser transportieren zu können. Auch kann der Sack selber mit einer Tragevorrichtung in Form von Gurten versehen sein.

Bei dem erfindungsgemäßen Sack aus Anspruch 1 ist es vorgesehen, dass zumindest eine Lage des Packmittels wenigstens teilweise Vliesmaterial aufweist. Dabei kann das Vliesmaterial wirklich nur teilweise eine Lage des Packmittels bilden, so können z. B. die Lagestreifen punktuell oder bereichsweise mit Vliesmaterial versehen sein, so dass eben keine vollständig geschlossene Lage des Packmittels aus Vliesmaterial vorhanden ist. Auf diese Art und Weise lässt sich ein materialschonender Einsatz und damit deutlich reduzierte Kosten realisieren. Auch ist es denkbar, dass die Lage des Vliesmittels vollständig aus Vliesmaterial aufgebaut ist, wodurch eine besonders einfache Konstruktion des Sacks erreichbar ist. Insbesondere ist dies dann von Vorteil, wenn nur genau eine Lage des Packmittels vorhanden ist, die nämlich Vliesmaterial aufweist.

Ferner kann es erfindungsgemäß vorgesehen sein, dass der Schlauchstückbereich schlauchartiges Rundmaterial aufweist, so dass auf eine Längsnaht, die im Wesentlichen in Längserstreckung verläuft, verzichtet werden kann. Dieses Rundmaterial weist dabei einen kreisförmigen, in sich geschlossenen Querschnitt auf. Da jedoch das Rundmaterial in der Regel flexibel ist, kann das Rundmaterial flach zusammengefaltet sein und zu einer Rolle in Längserstreckung aufgerollt sein. Durch den Querschnitt des Rundmaterials wird gleichzeitig die Form, insbesondere der Querschnitt des Sacks über seine Längserstreckung, vorbestimmt. Ebenfalls ist es denkbar, dass anstelle des schlauchartigen Rundmaterials ein Flachmaterial zum Einsatz kommt, welches zu einem Schlauchstückbereich verbunden wird, indem die beiden Längsseiten des Flachmaterials aneinanderstoßen oder überlappen und miteinander verbunden werden. Die Verbindung der beiden Längsseiten des Flachmaterials kann durch Kleben, Heißluftschweißen, Schweißen oder aber Vernähen oder eine Kombination der zuvor genannten Verbindungstechniken erfolgen. Üblicherweise entsteht hierbei eine Längsnaht, die sich in Längserstreckung des Schlauchstückbereichs erstreckt. Idealerweise entspricht die Dicke der Längsnaht der Dicke des Flachmaterials, so dass im Bereich der Längsnaht kein Dickenzuwachs vorhanden ist. Hierdurch ist es möglich, dass auch das zum Schlauch verbundene Flachmaterial auf einer Rolle aufgewickelt werden kann, um quasi als Endlosmaterial für die Sackherstellung zu dienen, genauso wie das zuvor erwähnte schlauchartige Rundmaterial. Gerade beim Einsatz von Vliesmaterial als Lage des Packmittels kann dieses im Bereich der Längsnaht durch Druckeinwirkung und/oder Hitzeeinwirkung in der Dicke reduziert werden, so dass die beiden sich überlappenden Längsseiten des Flachmaterials nicht aufaddieren, sondern in Summe der Dicke einer normalen Stelle des Flachmaterials entsprechen. Zu der bereits genannten stoffschlüssigen Verbindung des Flachmaterials kann auch eine zusätzliche formschlüssige Verbindung durch eine Längsnaht erfolgen. Auch ist es denkbar, dass ein Längszettel zum Einsatz kommt, der stoff- und oder formschlüssig die Längsnaht des zum Schlauch verbundenen Flachmaterials verstärkt. Dabei kann dieser Längszettel einseitig oder beidseitig zumindest an der Außen- und/oder Innenwand vom Packmittel angeordnet sein.

Des Weiteren ist es erfindungsgemäß denkbar, dass der Schlauchstückbereich derart durch Kanten in der Längserstreckung geformt ist, dass zwei Frontwandungen und zumindest zwei Seitenwandungen gebildet sind. Die zuvor erwähnten Kanten des Schlauchstückbereichs können durch Pressungen des Schlauchstückbereichs über die Längserstreckung geformt werden. Durch insgesamt vier Kanten lässt sich der Schlauchstückbereich zu einem kastenförmigen Sack ausformen, wobei jedoch noch die Enden am Schlauchstückbereich angeformt werden müssen. Sofern die Frontwandungen genauso breit sind wie die Seitenwandungen, kann ein quadratischer Querschnitt des Schlauchstückbereichs erzielt werden. Üblicherweise werden jedoch eher rechteckförmige Querschnitte erzielt, wobei die beiden Frontwandungen deutlich breiter ausgestaltet sind als die beiden Seitenwandungen. Die beiden Seitenwandungen sind zwischen den Frontwandungen angeordnet, wodurch ein kastenförmiger Sack erzielbar ist. Ferner ist es denkbar, dass zumindest eine Seitenwandung eine Seitenfalte in Längserstreckung aufweist, die mit einer Tiefe A, insbesondere von den Seitenwandungen eingelegt ist und aus dem ausgeformten Schlauchstückbereich ein Seitenfaltsack gebildet werden kann. Zweckmäßigerweise ist die Seitenfalte gleich tief mit der Tiefe A in die Seitenwandung eingebracht. Ein derartig ausgeformter Schlauchstückbereich weist somit insgesamt sechs längs gerichtete Kanten auf, wodurch die beiden Frontwandungen gebildet werden und die beiden Seitenwandungen mit den jeweils zusätzlichen Seitenfaltungen. Ein derartig ausgefalteter Schlauchstückbereich kann durch einen Rollboden bzw. Faltboden auf einfache Art und Weise den Seitenfaltsack bilden.

Um zumindest ein Ende des Schlauchstückbereichs auf einfache Art und Weise verschließen zu können, kann es vorgesehen sein, dass wenigstens dieses Ende am Schlauchstückbereich eine Querfaltung oder Querrollung aufweist, die quer zur Längserstreckung des Schlauchstückbereichs verläuft. Idealerweise entspricht die Breite der Querfaltung oder Querrollung der Breite des Schlauchstückbereichs. Gerade bei einem Schlauchstückbereich mit in den Seitenwandungen eingelegten Seitenfalten bildet sich hierdurch ein Seitenfaltsack, der ein besonders gut und sicher verschlossenes Ende durch die Querfaltung oder Querrollung aufweist. Dabei ist idealerweise die Querfaltung oder Querrollung zumindest teilweise direkt und/oder indirekt, bspw. durch einen Zettel, mit dem längserstreckten Schlauchstückbereich verbunden, um den Schlauchstückbereich an diesem Ende zu verschließen. Die Verbindung der Querfaltung oder Querrollung mit dem längserstreckten Schlauchstückbereich kann stoffschlüssig durch Schweißen, Heißluftschweißen, Kleben oder dergleichen erfolgen. Auch ist es denkbar, dass hier zusätzlich eine Naht als Verbindungsmittel vorgesehen sein kann. Auch der bereits erwähnte Zettel kann über die Querfaltung oder Querrollung mit dem längserstreckten Schlauchstückbereich stoffschlüssig verbunden sein. Dabei kann der Zettel über die gesamte Breite des längserstreckten Schlauchstückbereichs mit der Querfaltung oder Querrollung verbunden sein. Auch ist es denkbar, dass der Zettel nur teilweise über den längserstreckten Schlauchstückbereich mit der Querfaltung oder Querrollung verbunden ist. Auch kann der Zettel eine Höhe H aufweisen, die kleiner oder gleich der Tiefe A der Seitenfalten ist, wodurch ein besonders stabiler Rollboden ausgestaltet werden kann.

Erfindungsgemäß ist es vorgesehen, dass wenigstens an einem Ende am Schlauchstückbereich zwei oder mehrere Querfaltungen oder Querrollungen vorgesehen sind, die insbesondere aufeinander liegen. Mit anderen Worten, es sind zumindest zwei oder mehrere Querfaltungen oder Querrollungen des Schlauchstückbereichs von 180° um eine Achse vorgesehen sein, die quer zu den Seitenfalten verläuft. Durch diese Verstärkung der Rollung bzw. Faltung wird gleichzeitig der gesamte Bodenbereich des entsprechenden Endes am Schlauchstückbereich deutlich verstärkt. Erfindungsgemäß ist ein Zettel zum Befestigen der Querfaltung oder Querrollung vorgesehen, dieser kann auch aus einem Klebestreifen, in Form von Klebeband ausgestaltet sein. Das entsprechende Ende des Schlauchstückbereichs kann durch einen Staffelschnitt und/oder Geradeschnitt gebildet werden, wodurch die Querfaltung oder Querrollung vereinfacht wird. Auch ist es denkbar, dass beide Enden des Schlauchstückbereichs als Rollböden ausgestaltet sind, wodurch ein insgesamt sehr stabiler Seitenfaltsack gebildet ist. Da die Querfaltung oder Querrollung auch einfach herstellbar ist, kann dieser Seitenfaltsack auch besonders kostengünstig gefertigt werden.

Auch ist es denkbar, dass im Rahmen der Erfindung der Schlauchstückbereich derart durch Kanten in der Längserstreckung geformt ist, dass zwei Frontwandungen und zumindest zwei Seitenwandungen gebildet sind, wobei die Seitenwandungen zwischen den Frontwandungen angeordnet sind und die Seitenwandungen an wenigstens einem Ende am Schlauchstückbereich quer zur Längserstreckung in das Schlauchstück, insbesondere als rechteckförmige Lappen eingefaltet sind und sich bei den Frontwandungen dadurch insbesondere trapezförmige Lappen bilden, die ebenfalls quer zur Längserstreckung in das Schlauchstück eingefaltet sind. Hierbei kann auf einfache Art und Weise ein Kreuzboden für das entsprechende Ende am Schlauchstückbereich realisiert werden. Bei einem derartig ausgebildeten Schlauchstückbereich reichen vier Kanten, so dass auf die zuvor erwähnten Seitenfalten zwischen den Seitenwandungen, wie beim Seitenfaltsack verzichtet werden kann. Jedoch ist es auch denkbar, dass auch ein Kreuzboden in einem Schlauchstückbereich mit Seitenfalten in den Seitenwandungen zum Einsatz kommt. Durch den Kreuzboden kann insgesamt ein Kastensack gebildet werden, der genauso wie der Seitenfaltsack besonders gut stapelbar ist. Durch die stoffschlüssige Verbindung der übereinander liegenden Lappen des Kreuzbodens kann ein zuverlässiges Verschließen des Schlauchstückbereichs an diesem Ende bewirkt werden. Auch diese stoffschlüssige Verbindung kann durch Wärmeinduzierung, Klebung, Schweißung oder dergleichen erzeugt werden. Zusätzlich kann auch wieder ein Verstärkungszettel zum Einsatz kommen, der teilweise oder vollständig über den Kreuzboden angeordnet ist. Auch dieser Verstärkungszettel kann durch eine stoffschlüssige Verbindung mit dem Kreuzboden verbunden sein. Auch sei erwähnt, dass bei einer nicht erfindungsgemäßen Ausgestaltung beide Enden des Schlauchstückbereichs mit einem Kreuzboden ausgestattet werden können. Auch ist eine Kombination von einem Kreuzboden und einem Rollboden bei dem erfindungsgemäßen Sack denkbar. Idealerweise wird jedoch immer die gleiche Bodenform für einen Sack verwendet, da diese auf einfache Art und Weise in der Regel auf der gleichen Maschine herstellbar ist. Eine Kombination von unterschiedlichen Böden, wie dem Rollboden und dem Kreuzboden erfordert dahingehend zusätzlichen maschinellen und Anlagenaufwand, der bereits aus Kostengründen gerne vermieden wird.

Des Weiteren kann zur besseren Befüllung des Sackes mit Packgut an dem anderen Ende am Schlauchstückbereich ein Einfüllventil angeordnet sein. Hierbei ist es denkbar, dass das Einfüllventil durch Faltung und/oder Rollung des Endes herstellbar ist. Idealerweise kann ein Ventilzettel zum Einsatz kommen, um das Ventil auf einfache Art und Weise ausbilden zu können. Dabei kann der Ventilzettel selbst schlauchförmig gerollt sein, um das Packgut durch den Querschnitt des gerollten Ventilzettels ins Innere des Sackes leiten zu können. Bei dem Einsatz eines Ventilzettels bildet sich ein selbst verschließbares Ventil, da nach dem Herausziehen eines Einfüllstutzens in das Einfüllventil dieses quasi durch das Packgut selber verschlossen wird, so dass ein Verschließen des Ventils nicht gesondert erfolgen muss. Der Ventilzettel kann dabei auf die rechteckförmigen Lappen befestigt werden, bevor die äußeren trapezförmigen Lappen zu einem Kreuzboden befestigt werden. Somit liegt der Ventilzettel zwischen den rechteckförmigen Lappen und den trapezförmigen Lappen bei einem Kreuzboden. Da der Zettel vorzugsweise selbst schlauchförmig ausgestaltet ist, lässt sich somit das gewünschte Einfüllventil realisieren, da der Querschnitt des schlauchförmigen Ventilzettels gleichzeitig den Einfüllstutzen des Einfüllventils bildet. Idealerweise weist der Ventilzettel das gleiche Material wie das Packmittel oder zumindest eine Lage vom Packmittel auf.

Wie zuvor erwähnt worden ist, kommt bei der Ausgestaltung der Enden des Schlauchstückbereichs ein Verstärkungszettel zum Einsatz, der an wenigstens einem Ende am Schlauchstückbereich befestigt ist, um eine Stabilisierung zu erzielen. Dieser Zettel ist selber luftdurchlässig ausgestaltet, was z. B. durch eine Perforation des Zettels bewirkt werden kann. Auch der zuvor erwähnte Ventilzettel kann luftdurchlässig ausgestalt sein, genauso wie der Längszettel für die Längsnaht. Auch kann der entsprechende Zettel bereits aus einem Material bestehen, was selber luftdurchlässig ist, wie z. B. Vlies oder ein luftdurchlässiges Gewebe. Als Zettel kann auch eine perforierte Folie, insbesondere ein perforiertes Klebeband zum Einsatz kommen.

Zusätzlich können die verschlossenen Enden des Schlauchstückbereichs mit einem Bodenleger verstärkt werden, der innerhalb des Sacks zum Einsatz kommt. Dieser Bodenleger kann flexibel oder sogar starr ausgestaltet sein, wodurch die Form des jeweiligen Bodenbereichs des Sackes verbessert wird. Auch der Bodenleger selbst kann luftdurchlässig oder luftundurchlässig ausgestaltet sein, je nach Anwendungsbereich des Sackes und des zu verpackenden Packguts. Idealerweise ist der Bodenleger geometrisch komplementär zur Ausgestaltung des jeweiligen Bodens des Sacks ausgestaltet, bei dem er zum Einsatz kommen soll. Dabei ist die geometrische Form des Bodenlegers etwas kleiner in den geometrischen Ausmaßen auszugestalten als die Querschnittsfläche des zu verschließenden Endes des Schlauchstückbereichs. Der Bodenleger kann lose in den Sack eingelegt werden oder an der Innenwand des Packmittels befestigt sein, damit dieser nicht beim Ausschütten des Packguts herausfällt. Selbstverständlich können auch beide verschlossenen Enden des Schlauchstückbereichs des Sackes mit einem Bodenleger ausgestattet werden, wodurch ein besonders stabiler Sack erzielbar ist.

Auch ist es im Rahmen der Erfindung denkbar, dass ein so genannter Klemmboden an dem anderen Ende des Schlauchstückbereichs realisiert wird. Dabei werden einfach die Schlauchstückenden stoff- und/oder formschlüssig oder sogar kraftschlüssig durch eine Klemme miteinander verbunden und verschließen somit das Ende des Schlauchstückbereichs. Von außen kann das zusammengefügte Schlauchstückbereichsende mit einem Verstärkungszettel oder einer Metallklemme verbunden werden. Auch können die aufeinander liegenden Seiten des Schlauchstückbereichs durch Tackern, Kleben, Schweißen, Nähen miteinander verbunden werden. Insgesamt gesehen bildet sich jedoch kein geometrisch schön ausgestalteter Boden, wodurch der entsprechend gebildete Klemmbodenbereich kaum geeignet ist, um den Sack darauf stellen zu können. Auch eine Lagerung des Sackes ist nicht ideal, da durch den geklemmten Boden Platz auf einer Palette zur Lagerung der Säcke verschenkt wird.

Wie bereits zuvor erwähnt worden ist, ist zumindest eine Lage des erfindungsgemäßen Sackes als teilweise Vlieslage ausgestaltet. Dabei kann ein Vliesmaterial zum Einsatz kommen, welches eine Kombination von Naturfasern und Kunstfasern, insbesondere aus Kunststoff, aufweist. Auch ist es denkbar, dass das Vliesmaterial ausschließlich aus Naturfasern oder ausschließlich aus Kunstfasern gebildet ist, wodurch gerade ein Recyceln des Sackes vereinfacht wird. Durch die Kombination von Natur- und Kunstfasern lassen sich jedoch die jeweiligen Vorteile der Fasern miteinander kombinieren. So können z. B. Naturfasern dazu dienen, eine gewisse Wassermenge aufzunehmen und vom Packgut fernzuhalten. die Kunstfasern können hingegen eine erhöhte Zugfestigkeit aufweisen und das Vliesmaterial in seiner mechanischen Belastbarkeit verstärken. Auch ist es denkbar, dass Kunstfasern zum Einsatz kommen, die aus Biokunststoffen hergestellt sind, die CO₂-neutral verrottbar sind. Derartige Biokunststoffe werden aus nachwachsenden Rohstoffen hergestellt und sind somit erdölfrei ausgestaltet. Auch lassen sich derartige Kunstfasern aus Biokunststoffen CO₂-neutral thermisch entsorgen.

Optional ist es bei der Erfindung ferner denkbar, dass ein Vliesmaterial mit einer Kombifaser vorgesehen ist, wobei die Kombifaser selbst zumindest zwei Materialien aufweist. Damit ist gemeint, dass eine Faser zwei Materialien aufweist und nicht, dass zwei Fasern mit unterschiedlichen Materialien zum Einsatz kommen, wie im Abschnitt zuvor erwähnt. Bei der Kombifaser ist es denkbar, dass insbesondere zwei Materialien axial zueinander anordbar sind. Somit kann die Kombifaser bspw. zumindest eine Seele und eine Umhüllung aufweisen. Die Seele kann dabei aus einem Material bestehen und die Umhüllung aus einem anderen Material. Auch ist es denkbar, dass mehrere Seelen aus einem gleichen Material oder unterschiedlichem Material von einer Umhüllung umgeben sind. Auch die Umhüllung selbst kann durch eine zusätzliche Umhüllung umgeben sein. Ebenfalls ist es denkbar, dass die Kombifasern in ihrer Längserstreckung materialunterschiedlich ausgestaltet sind, so dass ein Abschnitt der Kombifaser ein anderes Material aufweist, als ein vorhergehender oder daran anschließender Längenabschnitt. Somit ist es möglich, Vliesmaterial mit ganz speziellen chemischen und physikalischen Eigenschaften zu erzeugen. Auch kann die Kombifaser ebenfalls aus Biokunststoffen ganz oder teilweise herstellbar sein. Ebenfalls ist es denkbar, dass z. B. die inneren Seelen der Kombifaser aus Naturfaser bestehen und die äußeren Umhüllungen durch eine Kunstfaser gebildet werden. Selbstverständlich ist auch eine Umkehr der Materialien denkbar. Zusätzlich kann die Kombifaser auch mit Natur- und Kunstfasern innerhalb des Vliesmaterials kombiniert werden. Ferner kann das Vliesmaterial ausschließlich Kombifasern aufweisen oder wie zuvor erwähnt, nur bereichsweise oder nur teilweise. Auch sei erwähnt, dass aus diesen Kombifasern auch ein Gewebe herstellbar ist, welches mit dem Vliesmaterial der zumindest einen Lage des Packstoffes zum Einsatz kommen kann.

Das Vliesmaterial des erfindungsgemäßen Sackes kann mit einer maximalen Faserlänge einer Faser von unter 100 cm Länge ausgestattet sein. Durch besonders lange Fasern lässt sich ein besonders stabiler Verbund des Vliesmaterials herstellen. Allerding ist es bei diesem Vliesmaterial schwierig, ein möglichst homogenes Vliesmaterial zu erzeugen. Somit kann vorzugsweise die maximale Faserlänge einer Faser auch unter 80 cm, besonders bevorzugt von unter 40 cm vorhanden sein. Bei kürzeren Faserlängen hat sich herausgestellt, dass die Homogenität des Vliesmaterials einfacher zu erzielen ist. Somit ist z. B. eine einheitliche Dicke des Vliesmaterials durch die Homogenität erzielbar.

Auch ist es denkbar, das Vliesmaterial mit einer maximalen Faserdicke einer Faser von unter 3 mm zum Einsatz kommt. Vorzugsweise kann die maximale Faserdicke einer Faser auch unter 1 mm, besonders bevorzugt unter 0,5 mm vorhanden sein. Umso dicker die Faserdicke ist, umso stabiler kann das Vliesmaterial mit seinen mechanischen Eigenschaften ausgestaltet sein. Allerdings nimmt auch die Flexibilität des Vliesmaterials mit der Dicke der Faser ab. Somit weist ein Vliesmaterial aus Fasern mit einer geringen Faserdicke eher eine höhere Flexibilität auf. Auch kann eine Filterwirkung eine Luftdurchlässigkeit des Vliesmaterials durch die Faserlänge und die Faserdicke beeinflusst werden. Umso dünner und umso dichter die Fasern miteinander verbunden sind, umso größer ist die Filterwirkung des Vliesmaterials. Allerdings nimmt damit auch die Luftdurchlässigkeit ab, was bei einem Einfüllen des Sackes mit sehr staubigen Packgütern zu einem Verschließen des Vliesmaterials führen kann.

Grundsätzlich ist jedoch die Filterwirkung von Vliesmaterial beim Einsatz von Säcken als recht gut bis sehr gut zu bezeichnen. So weist das Vliesmaterial den Vorteil auf, dass es an sich bereits luftdurchlässig ist und die gewünschten Filtereigenschaften für staubförmige Packgüter bereits aufweist. Damit erübrigen sich häufig zusätzliche Lüftungslöcher durch Perforieren oder Nadeln des Vliesmaterials. Auch weist Vliesmaterial keine glatte Materialoberfläche auf, so dass die Oberfläche vom Vliesmaterial als rutschhemmend zu bezeichnen ist. Diese Rutschhemmung kann gerade bei einem Sack beim Stapeln und Transport benutzt werden, wenn die Oberfläche des Vliesmaterials als Außenwandung Verwendung findet. Aber auch Vliesmaterial als Innenwandung kann zu einem sicheren Halt des Packguts innerhalb des Sackes führen, wodurch das Packgut nicht innerhalb des Sackes hin und her rutscht.

So ist es grundsätzlich im Rahmen der Erfindung denkbar, dass eine Seitenwand zumindest zwei miteinander verbundene Vlieslagen aufweist, wobei insbesondere die Vlieslagen quer zu ihren Faserverläufen angeordnet sein können. Die Verbindung der Vlieslagen kann großflächig oder auch nur punktuell erfolgen, wobei als Verbindungstechniken Schweißen, Verkleben, Heißpressen und Heißluftpressen denkbar sind, um eine stoffschlüssige Verbindung zu erzielen. Durch die Queranordnung der beiden Vlieslagen kann die Filterwirkung der entsprechenden Seitenwand verbessert werden. Auch ist es denkbar, dass zumindest zwei Vlieslagen einer Seitenwand durch eine Zwischenlage zumindest bereichsweise oder vollständig miteinander verbunden sind. Bei der Zwischenlage kann es sich um eine Klebefolie, einen Heißkleber oder dergleichen handeln. Idealerweise ist die Zwischenlage nicht großflächig ausgestaltet, sondern bereichsweise, um die Luftdurchlässigkeit der Vlieslagen nicht vollständig zu reduzieren. Sollte eine großflächige Verbindung der Vlieslagen zum Einsatz kommen, so ist eine Perforierung der Zwischenlage oder eine Nadelung vorzusehen.

Für das Vliesmaterial zumindest einer Vlieslage kann ein orientierter Vlies bzw. Vliesstoff zum Einsatz kommen, bei dem die Fasern hauptsächlich in eine Richtung ausgerichtet sind. Auch ist es denkbar, dass ein so genanntes Vlies mit einer Kreuzlage zum Einsatz kommt, bei dem die Fasern hauptsächlich in zwei quer zueinander liegenden Richtungen hin ausgerichtet sind. Ebenfalls ist es denkbar, dass ein Vlies mit einer so genannten Wirrlage für die Fasern zum Einsatz kommt, wobei die einzelnen Fasern des Vlieses quasi keine offizielle Orientierung aufweisen. Gerade das orientierte Vlies weist den Vorteil auf, dass es eine besondere Streckrichtung gibt, in der das Vliesmaterial besonders zugfest ist. Bei der Kreuzlage des Vlieses existieren hingegen zwei Zugfestigkeitsrichtungen des Vlieses. Bei der Wirrlage weist das Vlies quasi in jede Richtung die gleiche Zugfestigkeit auf.

Eine Vliesverfestigung der zumindest einen Vlieslage kann durch einen Verbund der Fasern durch Reibschluss oder durch eine Kombination von Reib- und Formschluss hergestellt werden. Bei der Reibschlussbindung wird durch eine Vliesverdichtung der Abstand der benachbarten Fasern gegenüber dem Vlies verringert. Dabei wird die Haftung der Fasern aneinander erhöht und es können höhere Kräfte übertragen werden. Der Widerstand des Vlieses gegen Verformung wird höher, wodurch er fester wird. Erreicht werden kann diese Verdichtung durch Schrumpfen aller Fasern oder eines Anteils, wenn die Fasern schrumpffähig bei Einwirkung von Wärme und/oder einem Quellmittel sind. Ebenso kann das Verdichten durch Pressen meist mit Kalandern oder durch Walken erfolgen, bei welchem die Fasern des Vlieses filzfähig sein sollten und gleichzeitig thermische, chemische und mechanische Einwirkungen zum Verfilzen führen. Bei der Kombination von Reib- und Formschluss werden die Fasern dieses Vlieses durch mechanische Einwirkung miteinander verschlungen. Dieses Verschlingen der Fasern und damit das Verdichten und Verfestigen des Vlieses kann durch Vernadeln erfolgen, indem eine Vielzahl von speziell in einem Nadelbett und -balken angeordneten Nadeln (so genannte Widerhakennadeln, Gabelnadeln) ein- und ausgestochen werden. Diese Art der Verfestigung des Vlieses kann sowohl für Vlies aus Spinnfasern oder auch Endlosfasern erfolgen. Bei den chemischen Verfestigungsverfahren des Vlieses wird der Verbund der Fasern durch Stoffschluss mittels Zusatzstoffen hergestellt. Die Verbindung der Fasern mit den Zusatzstoffen, so genannte Bindemittel, wird auch als adhäsive Bindung bezeichnet. Bei der überwiegenden Anzahl der chemischen Verfahren wird das Bindemittel in flüssiger Form (z. B. Polymerdispersion) auf dem Vlies appliziert und durch eine anschließende Wärmebehandlung (Trocknung, Kondensation oder Polymerisation) ausgehärtet, wodurch das Vlies verfestigt wird. Bei den thermischen Verfestigungsverfahren des Vlieses wird der Verbund der Fasern ebenfalls durch Stoffschluss hergestellt, wobei oft noch zwischen adhäsivem und kohäsivem Verbund unterschieden wird. Voraussetzung sind thermoplastische Zusatzkomponenten oder thermoplastische Fasern bei dem Vlies. Auch sind Kombinationen von Verfestigungsverfahren für das erfindungsgemäße Vlies denkbar.

Wie zuvor bereits erwähnt worden ist, kann ein Vliesmaterial mit Fasern vorhanden sein, wobei die Fasern teilweise stoffschlüssig und/oder formschlüssig miteinander verbunden sind. Hierbei ist es denkbar, dass das Vliesmaterial mit einem Durchdringungsmittel getränkt ist, wodurch zumindest teilweise Zwischenräume zwischen den Fasern verschließbar sind. Das Durchdringungsmittel selbst kann wasserunlöslich sein, wodurch die Wasserdichtigkeit des Vliesmaterials erhöht wird. Als Durchdringungsmittel können z. B. Öle oder Wachse vorgesehen sein. Bei einer ganz besonderen Ausgestaltung des Vliesmaterials ist es denkbar, dass das Durchdringungsmittel auf- bzw. eingedruckt wird, durch entsprechende Drucktechniken. Auch kann so eine Beschichtung des Vliesmaterials bereichsweise oder vollständig erfolgen. Ebenfalls ist es denkbar, dass das Durchdringungsmittel aufgesprüht oder auflackiert wird. Dabei kann insbesondere die Innenwand und die Außenwand des Packmittels durch die zuvor genannten Techniken behandelt und bearbeitet werden. Um die bedruckten oder beschichteten Bereiche des Packmittels bzw. der entsprechenden Vlieslage luftdurchlässig auszugestalten, können nachträglich Perforationen oder Nadelungen, insbesondere durch Heißnadeln, vorgenommen werden.

Bei der Perforation bzw. der Nadelung können insgesamt 10 bis 100, insbesondere 20 bis 80, bevorzugt 50 bis 70, Perforationen pro cm² vorgesehen sein, die von der Innenwand bis zur Außenwand oder umgekehrt das Packmittel durchdringen. Vorzugsweise kann dabei ein Durchmesser der Perforation oder der Nadelung wenigstens 0,05 mm, bevorzugt 0,1 mm, betragen. Hierdurch kann eine besonders gute Luftdurchlässigkeit des Packmittels in dem Bereich der Perforation erzielt werden.

Ferner ist es bei der Erfindung optional vorstellbar, dass ein Vliesmaterial mit einer Vliesfaser vorhanden ist, wobei die Vliesfaser ein Zug-E-Modul zwischen 800 und 12.000 MPa nach ISO 527, bevorzugt zwischen 1.200 und 10.000 MPa nach ISO 527, aufweist. Auch ist es denkbar, dass hierbei Vliesfasern zum Einsatz kommen, die eine Streckspannung von 20 bis 80 MPa nach ISO 527 aufweisen, bevorzugt zwischen 30 und 70 MPa, besonders bevorzugt zwischen 35 und 50 MPa. Durch diese mechanischen Eigenschaften lässt sich ein besonders stabiles Vlies herstellen, was auch gerade als Packmittel über die notwendige Zug- und Reißfestigkeit verfügt, um somit sicher zu stellen, dass das Packgut sicher innerhalb des Sackes gelagert und transportiert werden kann. Eine besondere Vliesfaser für das Vliesmaterial weist dabei eine Dichte von 1,2 bis 1,25 g pro cm³ auf, wozu vorzugsweise Kunststoffvliesfasern zum Einsatz kommen.

Auch ist es erfindungsgemäß möglich, dass bei dem Vliesmaterial zumindest Füllstoffe oder Additive, insbesondere in den Vliesfasern, vorhanden sind. Bei den Füllstoffen handelt es sich um Stoffe, die die physikalischen oder chemischen Eigenschaften des Vliesmaterials unbeeinflusst lassen und ausschließlich zur Vervollständigung des Vliesmaterials dienen, ohne jedoch negative Auswirkungen zu haben. Füllstoffe können zumindest einen der folgenden Bestandteile aufweisen: Kalk, Kaolin, Talkum, Kreide, Schiefermehl, Glimmerpulver und Schwerspat. Die Additive hingegen dienen zur Verbesserung der physikalischen oder chemischen Eigenschaften des Vliesmaterials und können dabei folgende Stoffe aufweisen: Farbstoffe, Farbpigmente, UV-Stabilisatoren, Temperaturstabilisatoren, Flammenschutzmittel, Weichmacher und Riechstoffe. Anders als die Füllstoffe, die zur Streckung des Vliesmaterials dienen, dienen somit die Additive ausschließlich zur Verbesserung des Vliesmaterials. Diese Additive können direkt in der Faser des Vliesstoffes angeordnet sein oder aber in Form eines Durchdringungsmittels in den Zwischenraum der Vliesfasern eingebracht werden. Wie bereits erwähnt worden ist, können bei dem Vliesmaterial auch gleichzeitig Füllstoffe und Additive zum Einsatz kommen, um die gewünschten Eigenschaften des Vliesmaterials zu erzielen. Durch den Einsatz der Füllstoffe kann der Materialpreis des Vliesmaterials reduziert werden. Die Additive hingegen erhöhen eher die Kosten, wodurch jedoch auch der Einsatzbereich des Vliesmaterials verbessert wird.

Vorteilhafterweise beträgt die Luftdurchlässigkeit der Sackwandung zumindest 15 L geteilt durch m² geteilt durch s, das sind also 15 L pro m² pro Sekunde gemessen nach EDANA-Norm 140.1. Hierdurch kann erreicht werden, dass beim Befüllen des Sackes die darin enthaltene Luft schnell genug entweichen kann, so dass ein Aufblasen des Sackes vermieden wird. Idealerweise liegt die Luftdurchlässigkeit von einem Bereich der Seitenwand von zumindest 30 L pro m² pro Sekunde nach EDANA-Norm 140.1.

Um eine ausreichende Kennzeichnung des Sackes mit dem entsprechenden Packgut zu erzielen, kann es vorgesehen sein, dass zumindest ein Etikett auf der Außenwand des Sackes sichtbar angeordnet ist, wobei auf dem Etikett Informationen zum Packgut aufführbar sind. So können diese Informationen einerseits Hinweise zum Packgut enthalten, wie z. B. Material, Korngröße, Mischungsverhältnis und dergleichen, sowie auch Informationen zum Gewicht und Preis des Packguts. Vorzugsweise ist auf dem Etikett ein maschinenlesbarer Code angebracht, um wesentliche Informationen zum Sack und Packgut maschinell lesbar durch eine Datenverarbeitungseinheit bereitstellen zu können. Hierbei kann es sich um einen Barcode, einen QR-Code oder dergleichen, handeln. Auch kann das Etikett mit einem RFID-Tag versehen sein, so dass die Informationen direkt elektronisch und kontaktlos von dem Etikett auslesbar sind. Idealerweise umfasst das Etikett nicht vollständig eine Seitenwand des Sackes, sondern weniger als 80 %, bevorzugt weniger als 60 %. Zusätzlich ist es denkbar, dass auch das Etikett luftdurchlässig insbesondere durch Lüftungsperforationen ausgestaltet ist. Das Etikett selber kann als zusätzliches Material auf der Außenwand des Sackes angebracht sein. Auch ist es denkbar, dass das Etikett ausschließlich drucktechnisch auf der Außenwand des Sackes angeordnet ist, wobei das Aufdrucken des Etiketts in verschiedenen Druckverfahrensschritten erfolgen kann. So ist z. B. auch denkbar, dass das Etikett in einem Mehrfarbendruck aufgedruckt ist. Auch ist es denkbar, dass das Etikett als zusätzlicher Zettel, der bereits fertig erstellt ist, mit sämtlichen Informationen stoff- und/oder formschlüssig an der Außenwand des Sackes angebracht wird. Z. B. kann das Etikett auch angeklettet werden, sofern die Außenwand des Sackes ebenfalls mit Vliesmaterial, insbesondere in dem Bereich des Etiketts, ausgestattet ist.

Als Packgut für den erfindungsgemäßen Sack können zumindest die folgenden Güter vorgesehen sein: Nahrungsmittel, Baustoffe, Düngemittel, Saatgut, Pflanzenschutzmittel, Kunststoffe und dergleichen. Bei den Nahrungsmitteln kann es sich z. B. um Kaffee- oder Kakaobohnen, Salz, Zucker, Mehl oder andere schüttfähige Güter, handeln. Bei den Baustoffen kann es sich um Zement, Zementmischungen, Sand und Sandmischungen, Estrichbeton, Kalk, Kies, Zuschlagstoffe oder dergleichen, handeln, die üblicherweise auch schüttfähig sind. Bei den Düngemitteln können ebenfalls schüttfähige Dünger, wie Blaukorn, Kalkammon oder dergleichen, zum Einsatz kommen. Diese Düngemittel können auch mit Pflanzenschutzmitteln oder Saatgut gemischt in einem Sack als Packgut vorkommen. Bei den Pflanzenschutzmitteln kommen ebenfalls vorzugsweise schüttfähige Mittel zum Einsatz, genauso wie bei den Kunststoffen, die in der Regel als Kunststoffgranulat bei den Säcken zum Einsatz kommen.

Idealerweise beträgt das Gewicht des Packguts pro Sack mindestens 10, vorzugsweise 25, besonders bevorzugt 50, 75 bzw. 100 kg. Innerhalb Europas werden bevorzugt Säcke mit einem Füllgewicht von 25 kg verwendet. Außerhalb Europas finden auch noch 50 kg-Säcke bzw. 100 kg-Säcke für die jeweiligen Packgüter Anwendung.

Es sei an dieser Stelle erwähnt, dass zumindest eine Lage des Packmittels als wasserundurchlässige Lage ausgestaltet sein kann. Hierbei kann es sich z. B. um eine Folie, ein Papier oder dergleichen handeln, welches wasserundurchlässig ist. Um jedoch auch eine Luftdurchlässigkeit dieser Lage zu erzielen, können entsprechende Perforationen oder Lüftungsbereiche vorgesehen sein.

Im Rahmen der Erfindung kann es ferner vorgesehen sein, dass der Sack eine Wasseraufnahme von weniger als 45 %, vorzugsweise weniger als 25 %, besonders bevorzugt weniger als 15 % aufweist. Die Wasseraufnahme berechnet sich aus dem abgegebenen Bestandteil in Prozenten oder in Milligramm, den eine Probe nach dem vollständigen Trocknen nicht mehr enthält. Die Wasseraufnahme in Prozent berechnet sich aus dem Faktor 100 mal dem Quotienten von Masse der gequollenen Probe minus Masse der getrockneten Probe geteilt durch Masse der getrockneten Probe. Die Wasseraufnahme in Milligramm berechnet sich hingegen durch die Differenz der Masse der gequollenen Probe minus Masse der getrockneten Probe. Vorzugsweise weist der Sack eine geringe Wasseraufnahme auf, um nicht unnötig das Gewicht des Sacks zu erschweren.

Wie bereits erwähnt wurde, kann es vorgesehen sein, dass zumindest eine Wand, insbesondere eine Frontwandung des Sacks, direkt bedruckt ist, wodurch zumindest eine teilweise Druckbeschichtung vorhanden ist. Hierbei ist es denkbar, dass der obere Sackbereich bedruckungsfrei ausgestaltet ist, um in diesem Bereich eine optimale Luftdurchlässigkeit zu erzielen. Allerdings können auch die gesamte Frontwandung sowie sämtliche Wände des Sacks bedruckt sein, wobei drucktechnisch kleine, kaum erkennbare Freiräume von mm² freigelassen werden, um eine Luftdurchlässigkeit des Sacks bereitzustellen. Das Beschichten des Sacks durch Druckereitechnik weist den Vorteil auf, dass diese millimetergenau vonstattengehen kann. So kann gerade die erforderliche Luftdurchlässigkeit des Sacks durch gezielte Aussparungen der Druckbeschichtung erzielt werden.

Ferner ist es im Rahmen der Erfindung denkbar, dass zumindest eine weitere Lage des Packmittels zumindest Gewebe, Papier oder Folie aufweist. Insbesondere ist eine Kombination der zuvor genannten Lagen des Packmittels in jeglicher Ausgestaltung möglich. So können auch mehrere Lagen Gewebe, Papier oder Folie nebeneinander oder getrennt voneinander durch andere Lagen angeordnet sein. Diese Lagen können insbesondere mit der erfindungswesentlichen Vlieslage kombiniert werden, um einen möglichst funktionalen Sack zu erreichen.

Ferner ist es erfindungsgemäß möglich, dass zumindest eine weitere Lage zur Vlieslage nur bereichsweise, insbesondere streifenweise, punktuell oder abschnittsweise, vorgesehen ist. Somit kann die Vlieslage z. B. durch eine streifenweise Anordnung einer Gewebelage in seiner Reißfestigkeit unterstützt werden. Aber auch die Vlieslage selber kann streifenweise, punktuell oder abschnittsweise vorhanden sein, wobei jedoch hierbei eine weitere Lage für die Sackwandung vorzusehen ist, an der die Vlieslage dann bereichsweise angeordnet ist. In den nachfolgenden Zeichnungen sind Beispiele hierzu aufgeführt.

Des Weiteren ist die vorliegende Erfindung auch auf ein Verfahren gemäß Anspruch 12 zur Herstellung eines Sacks aus einem Schlauchstückbereich gerichtet. Hierbei ist es erfindungsgemäß vorgesehen, dass durch eine Ausgestaltung der Enden des Schlauchstückbereichs der Sack hergestellt wird. Das erfindungsgemäße Verfahren wird dabei zur Herstellung des erfindungsgemäßen Sacks genutzt. Merkmale, die zu dem erfindungsgemäßen Sack offenbart werden, gelten auch für das erfindungsgemäße Verfahren und umgekehrt.

Eine Anlage oder Maschine kann zur Herstellung eines erfindungsgemäßen Sacks aus einem Schlauchstückbereich dienen. Hierbei dient die Anlage u. a. dazu, dass durch eine Ausgestaltung der Enden des Schlauchstückbereichs ein Sack hergestellt wird. Ebenfalls kann die Anlage dazu dienen, auch bereits aus einem Flachmaterial ein schlauchartiges Rundmaterial herzustellen. Üblicherweise wird zunächst aus dem Flachmaterial das schlauchförmige Rundmaterial hergestellt, um dann die Schlauchstückbereiche auf die entsprechende Länge abzulängen und daraus durch Ausgestaltung der Enden einen Sack herzustellen.

Weitere Maßnahmen und Vorteile der vorliegenden Erfindung ergeben sich aus den Ansprüchen, der nachfolgenden Beschreibung und den Zeichnungen. Ebenfalls gelten die offenbarten Merkmale für die erfindungsgemäße Vorrichtung auch für das erfindungsgemäße Verfahren und die erwähnte Anlage sowie jeweils umgekehrt. In den Zeichnungen ist die Erfindung in unterschiedlichen Ausführungsbeispielen dargestellt. Es zeigen:
- Figur 1: eine dreidimensionale Ansicht eines Schlauchstückbereichs eines Sacks mit den noch offenen ersten und zweiten Enden,
- Figur 2: eine Seitenansicht auf den Schlauchstückbereich aus Figur 1 mit einem teilweise aufgerollten ersten Ende,
- Figur 3: eine Draufsicht auf ein aufgerolltes Ende auf den Sack aus Figur 1 und 2 mit einem aufgebrachten Zettel,
- Figur 4: eine Seitenansicht auf den erfindungsgemäßen Sack, wobei der Sack aus den Figuren 1 bis 3 mit einem aufgebrachten und befestigten Zettel auf dem ersten Ende versehen ist,
- Figur 5: eine dreidimensionale Ansicht auf einen nicht erfindungsgemäßen kastenförmigen Sack mit Rundschlauchmaterial und einem Kastenboden,
- Figur 6: eine dreidimensionale Ansicht auf einen weiteren kastenförmigen Sack mit Längsnaht und einem Einfüllventil im Kopfbereich eines zweiten Endes,
- Figur 7: eine Draufsicht auf ein kastenförmiges zweites Ende eines Kopfbereichs eines Kastensacks mit Einfüllventil bzw. Einfüllzettel,
- Figur 8: eine Draufsicht auf ein zweites Ende eines kastenförmigen Sacks mit Kastenboden und beispielhaftem Bodenleger,
- Figur 9: eine Ausschnittvergrößerung V auf die Fasernlage bei einem orientierten Vlies,
- Figur 10: eine beispielhafte Vergrößerung V, vergleichbar zu Figur 9 eines Vlieses mit einem Vlies in Kreuzlage,
- Figur 11: ein beispielhafter Querschnitt durch eine Kombifaser mit drei Fasern als Seele und einer Umhüllung,
- Figur 12: ein Querschnitt durch eine Kombifaser mit einer Innenfaser als Seele und einer Umhüllung,
- Figur 13: ein beispielhafter Querschnitt durch verschiedene Kombifasern einer Vliesfaserlage,
- Figur 14 + 15: Draufsicht auf Wandungen eines erfindungsgemäßen Sacks mit unterschiedlich ausgestalten Packmitteln,
- Figur 16 - 19: beispielhafte Längsschnitte durch eine Seitenwandung des erfindungsgemäßen Sacks und
- Figur 20: eine Draufsicht auf eine Anlage zur Herstellung eines Sacks.

In den nachfolgenden Figuren werden für die gleichen technischen Merkmale auch für unterschiedliche Ausführungsbeispiele die identischen Bezugszeichen der Erfindung verwendet.

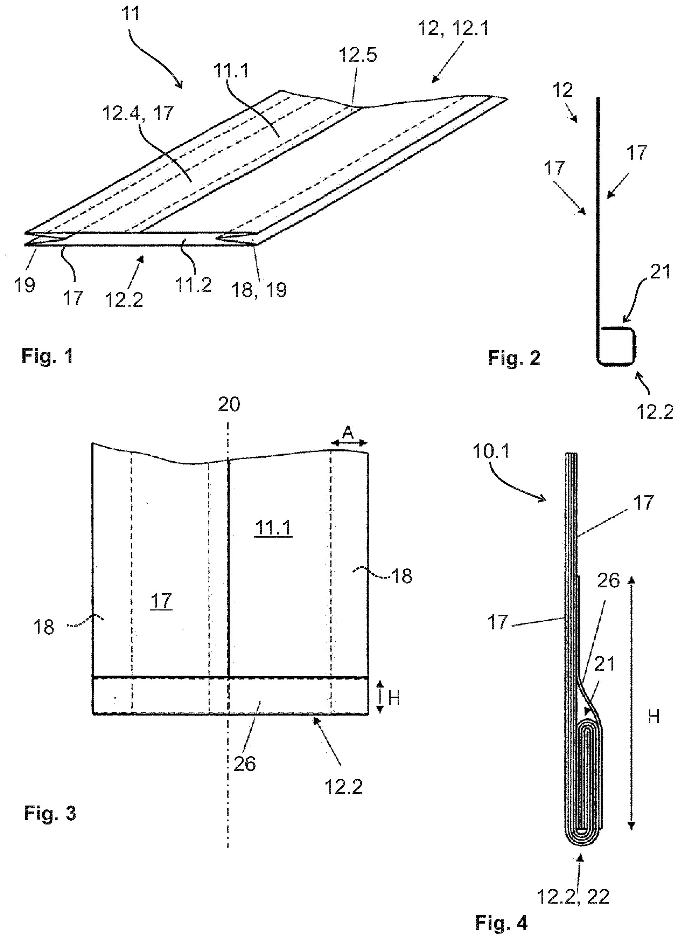

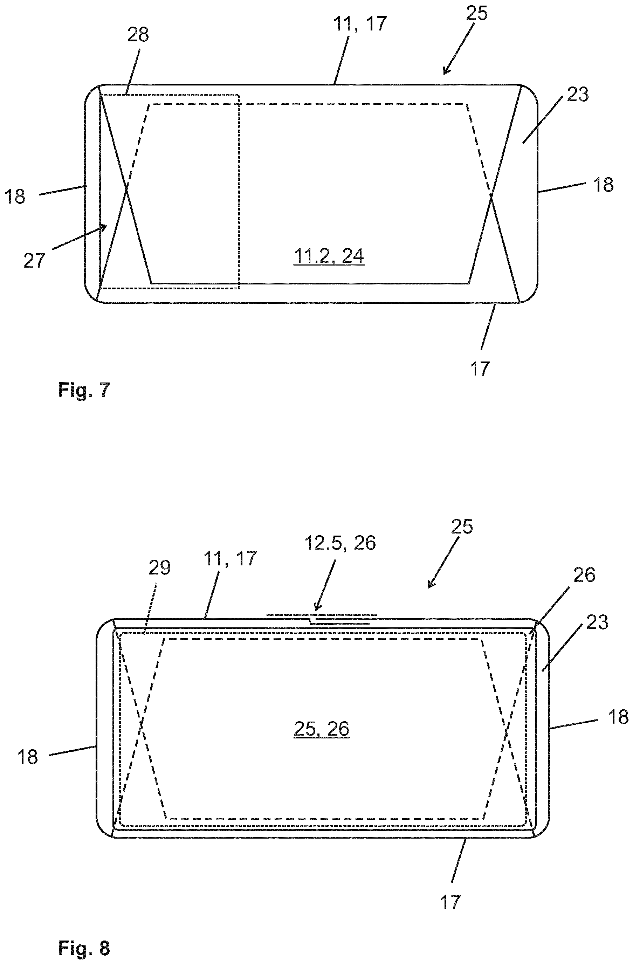

In Figur 1 ist eine dreidimensionale Ansicht eines Schlauchstückbereichs 12 für einen erfindungsgemäßen Sack 10 dargestellt. Dabei weist dieser Schlauchstückbereich 12 ein erstes und ein zweites Ende 12.1 und 12.2 auf, welches verschlossen den Bodenbereich und den Kopfbereich des Sackes 10 bilden. Im vorliegenden Fall kommt ein zum Schlauch geformtes Flachmaterial 12.4 zum Einsatz, welches bei dem Schlauchstückbereich 12 derart gefaltet bzw. gekantet ist, dass zwei Frontwandungen 17 und dazwischenliegend zwei Seitenwandungen 18 vorhanden sind. Die Seitenwandungen 18 weisen zusätzlich jeweils eine Seitenfalte 19 auf, um den Schlauchstückbereich 12 später zu einem Seitenfaltsack 10.1 ausgestalten zu können. Anstelle des zum Schlauch geformten Flachmaterials 12.4 kann auch ein bereits schlauchartig gefertigtes Rundmaterial 12.3 zum Einsatz kommen, bei dem eine Längsnaht 12.5 fehlt. Dieser Schlauchstückbereich dient zur Durchführung des erfindungsgemäßen Verfahrens zur Herstellung des erfindungsgemäßen Sacks 10. Als Bildung einer Längsnaht 12.5 wird aus dem Flachmaterial ein zum Schlauch geformtes Flachmaterial 12.4 hergestellt. In der Figur 8 ist eine vergleichbare Längsnaht deutlicher zu erkennen. Zusätzlich kann die Längsnaht 12.5 mit einem Verstärkungszettel 26 versehen werden. Der in der Figur 1 gezeigte Schlauch weist zwei Seitenfalten 19 auf, die mit einer Tiefe A (s. Figur 3) zwischen den Frontwandungen 17 im mittleren Bereich der Seitenwandungen 18 eingelegt sind.

Ein weiterer Schnitt des erfindungsgemäßen Verfahrens zur Herstellung des erfindungsgemäßen Sacks 10 wird aus der Figur 2 deutlich. Um eine Achse, welche quer zur Längsnaht 12.5 und in der Ebene parallel zu den Wandungen 7 des Schlauchbereichs 12 verläuft, wird das untere Ende 12.2 des Schlauchstückbereichs 12 gefaltet oder gerollt. Dabei kann das gefaltete Ende 21 des Schlauchstückbereichs auf der Frontwandung 7 bzw. dem Sack 10 zu liegen kommen, wie in der Figur 4 näher dargestellt. Jeweils zwei Schichten, die durch das Umfalten bzw. Umrollen aufeinander gelegt werden, können durch einen geeigneten Fügeprozess, insbesondere stoffschlüssig miteinander verbunden werden.

Nach dem Falten bzw. Rollen des ersten Endes 12.1 wird ein dargestellter Zettel 26 als Verstärkungszettel auf die Wandung 17, auf welcher die Querfaltung bzw. Querrollung 21 aufliegt, verbunden. Dabei kann der Verstärkungszettel 26 über die Querfaltung bzw. Querrollung 21 über die gesamte Breite des Sacks 10 erstreckt werden. Die Höhe H des Verstärkungszettels 26 ist in dem Ausführungsbeispiel aus Figur 3 und 4 etwas kleiner oder gleich der Tiefe A der Seitenfalten 19. Wenn die Höhe H des Zettels 26 kleiner oder gleich der Tiefe A ist und eine Seitenkante des Zettels 26 in der Nähe der Faltachse angeordnet ist, dann befindet sich der Zettel 26 ausschließlich im Bodenbereich des ersten Endes 12.1 des Sacks 10, wenn dieser, bspw. aufgrund einer Befüllung, eine Klotzform ausbildet. In diesem Fall ist der Bodenbereich auch bei einem gefüllten Sack 10 gegenüber mechanischen Belastungen äußerst widerstandsfähig. Um die Festigkeit dieses Bodenbereichs zu verbessern, kann es vorgesehen sein, dass sich die Querfaltung bzw. Querrollung 21 über die Hälfte der Höhe des Zettels 26 erstreckt.

In der Figur 4 ist eine Seitenansicht des Schlauchstückbereichs 12 mit der Querrollung 21 und dem befestigten Zettel 26 dargestellt. Da das zweite Ende 12.2 des Schlauchstückbereichs 12 idealerweise erst nach dem Befüllen des Sacks 10 gebildet wird, ist das zweite Ende 12.2 noch nicht ausgebildet. Der zum größten Teil fertiggestellte Sack 10 ist in der Figur 4 unbefüllt, wobei sich durch das Befüllen automatisch ein Rollboden in Klotzform für das erste Ende 12.1 bildet.

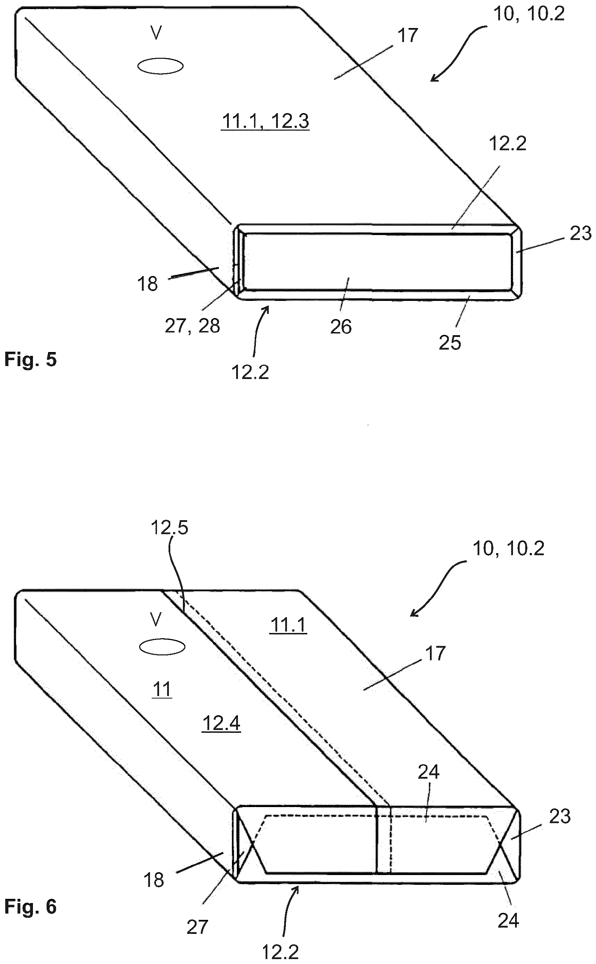

In der Figur 5 und 6 ist ein Sack 10 als Kastensack 10.2 dargestellt. Dabei ist in der Figur 5 der Schlauchstückbereich 12 als schlauchartiges Rundmaterial 12.3 längsnahtfrei ausgestaltet. Im Gegensatz dazu ist der Schlauchstückbereich 12 in Figur 6 mit einer Längsnaht 12.5 versehen, da es zuerst aus einem Flachmaterial 12.4 zu einem Schlauch geformt worden ist.

In Figur 5 ist beispielhaft das zweite Ende 12.2 des Schlauchstückbereichs 12, welches einen Kopfbereich für den Sack 10 bildet, mit einem Einfüllventil 27 dargestellt. Hierbei kommt ein Ventilzettel 28 zum Einsatz, der das Einfüllventil 27 bildet. Wie anhand der Figur 5 gut zu erkennen ist, ist der Kastensack 10.2 ohne Seitenfalten 19 ausgestaltet. Allerdings kann ein derartiger Kastensack auch in den Seitenwandungen 18 Seitenfalten 19, vergleichbar zum Seitenfaltsack 10.1 aus den Figuren 1 bis 4, aufweisen.

Auch in der Figur 6 ist das zweite Ende 12.2 des Kastensacks 10.2 mit einem Einfüllventil 27 dargestellt.

In der Figur 7 ist eine Draufsicht auf das zweite Ende 12.2 aus Figur 5 gezeigt. Hierbei ist deutlich der Kopfbereich erkennbar. Dabei sind zunächst zwei rechteckförmige Lappen 23 von den Seitenwandungen 18 in die Frontwandungen 17 eingefaltet. Anschließend wird der Ventilzettel 28 auf zumindest einen rechteckförmigen Lappen 23 aufgelegt und daran befestigt, wobei der Ventilzettel 28 vorzugsweise schlauchförmig ausgestaltet ist und somit eine Einfüllöffnung für das Einfüllventil 27 bildet. Der Ventilzettel 28 kann einseitig, wie im vorliegenden Fall in Figur 7 linksseitig, vorhanden sein. Dieses Einfüllventil 27 verschließt sich beim Befüllen des Sacks 10 mit Packgut selbstständig, sobald der maximale Füllstand erreicht ist und der Einfüllstutzen zum Einfüllen des Packguts aus dem Einfüllventil 27 herausgezogen wird. In diesem Augenblick drückt das Packgut vom Sackinneren gegen den Kopfbereich des Sacks 10 und verschließt somit das Einfüllventil 27. Nachdem nun der Ventilzettel 28 auf die rechteckförmigen Lappen 23 aufgebracht ist, können die beiden trapezförmigen Lappen 24, die eine Verlängerung des zweiten Endes 12.2 der beiden Frontwandungen 17 darstellen, eingeklappt werden und am zweiten Ende 12.2 durch z. B. eine stoffschlüssige Verbindung befestigt werden. Auch hierbei kann zusätzlich ein Verstärkungszettel 26, insbesondere in geometrischer Ausgestaltung zum erzeugten Kastenboden 25 aufgebracht und befestigt werden.

In der Figur 8 ist ein erstes Ende 12.1 eines Bodenbereichs des Kastensacks 10.2 in Draufsicht dargestellt. Dabei ist dieser Kastensack 10.2 aus einem zum Schlauch geformten Flachmaterial 12.4 hergestellt. Dabei ist die Längsnaht 12.5 deutlich zu erkennen. Diese ist optional zusätzlich durch einen Längszettel in Form eine Verstärkungszettels 26 verstärkt. Zusätzlich ist bei dem ersten Ende 12.1 im Bodenbereich des erfindungsgemäßen Sacks 10 ein Bodenleger 29 im Innenbereich des Sacks 10 angeordnet. Dieser Bodenleger 29 ist gestrichelt hierzu in Figur 8 dargestellt. Zusätzlich ist der Bodenbereich des Sacks 10 mit einem Verstärkungszettel 26 ausgestaltet, der über die beiden trapezförmigen Lappen 24 befestigt wird. Somit bildet sich der Kastenboden 25, der gleichzeitig dem Kastensack 10.2 seine geometrische Form gibt.

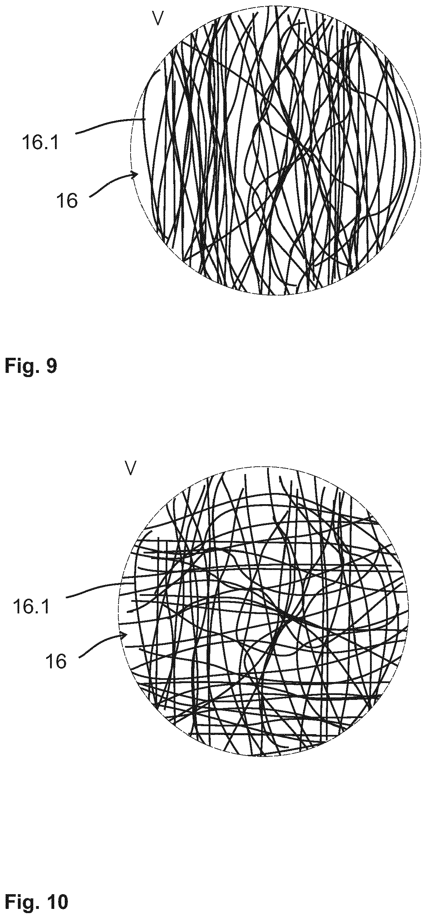

In den Figuren 9 und 10 ist eine Ausschnittvergrößerung V einer Vlieslage 13 aus Figur 5 oder 6 dargestellt. Dabei soll in den Figuren 9 und 10 ausschließlich die Orientierung der Fasern 16.1 vom Vliesmaterial 16 gezeigt werden. In Figur 9 sind die Fasern 16.1 vom Vliesmaterial 16 im Wesentlichen in eine Richtung orientiert, weshalb ein derartiges Vliesmaterial 16 auch als orientiertes Vlies bezeichnet wird.

Im Gegensatz dazu sind die Fasern 16.1 vom Vliesmaterial 16 aus Figur 10 in zumindest zwei unterschiedliche Richtungen orientiert und bilden eine so genannte Kreuzlage, so dass das Vlies auch als Kreuzlagenvlies bezeichnet wird. Sofern die einzelnen Fasern 16.1 vom Vliesmaterial 16 kreuz und quer, d. h. im Wesentlichen orientierungslos, verlaufen, handelt es sich um eine so genannte Wirrlage des Vlieses, die jedoch nicht in den Figuren 9 und 10 dargestellt ist.

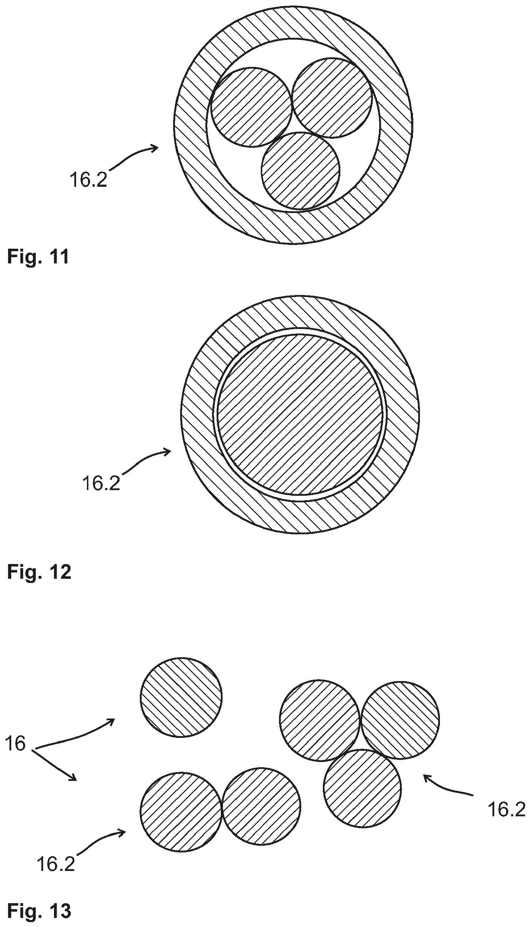

In der Figur 11 ist bspw. ein Querschnitt durch eine Kombifaser 16.2 vom Vliesmaterial 16 gezeigt. Hierbei weist die Kombifaser 16.2 insgesamt drei Faserseelen auf, die von einer äußeren Umhüllung umgeben sind. Dabei können die einzelnen Seelen der Kombifaser 16.2 aus ein und demselben oder unterschiedlichen Materialien bestehen. Auch können die einzelnen Seelen stoffschlüssig miteinander verbunden sein. Die Umhüllung der Kombifaser 16.2 kann im Gegensatz zu den Seelen aus anderem Material bestehen. Vorzugsweise wird sowohl für die Seele als auch für die Umhüllung der Kombifasern Kunststoffmaterial verwendet. So können bspw. die Seelen aus glasfaserverstärktem Kunststoff bestehen, wohingegen die Umhüllung reines Kunststoffmaterial aufweist.

In der Figur 12 ist ein vergleichbarer Querschnitt durch eine Kombifaser 16.2 dargestellt. Hierbei weist jedoch die dargestellte Kombifaser 16.2 nur eine Seele auf, die einen deutlich größeren Querschnitt aufweist als die vergleichbaren Seelen aus Figur 11. Somit füllt die Seele aus dem Beispiel in Figur 12 mehr oder weniger die Umhüllung der Kombifaser 16.2 vollständig aus. Auch in diesem Fall können unterschiedliche Materialien für die Seele und die Umhüllung der Kombifaser 16.2 zum Einsatz kommen, wie bereits in Figur 11 beschrieben.

In Figur 13 ist ein beispielhafter Querschnitt durch unterschiedliche Kombifasern 16.2 vom Vliesmaterial 16 dargestellt. Dabei können einzelne Seelen stoffschlüssig miteinander verbunden sein, so dass eine 2er- und 3er-Kombination zu den bereits erwähnten Kombifasern 16.2 entstehen kann, die jedoch umhüllungsfrei ausgestaltet sind.

Auch ist es denkbar, dass die Kombifasern 16.2 über ihre Länge materialveränderlich ausgestaltet sind. Auch können die einzelnen Seelen ebenfalls weitere Seelenteile aufweisen, die materialunterschiedlich zu dem Rest ausgestaltet sind.

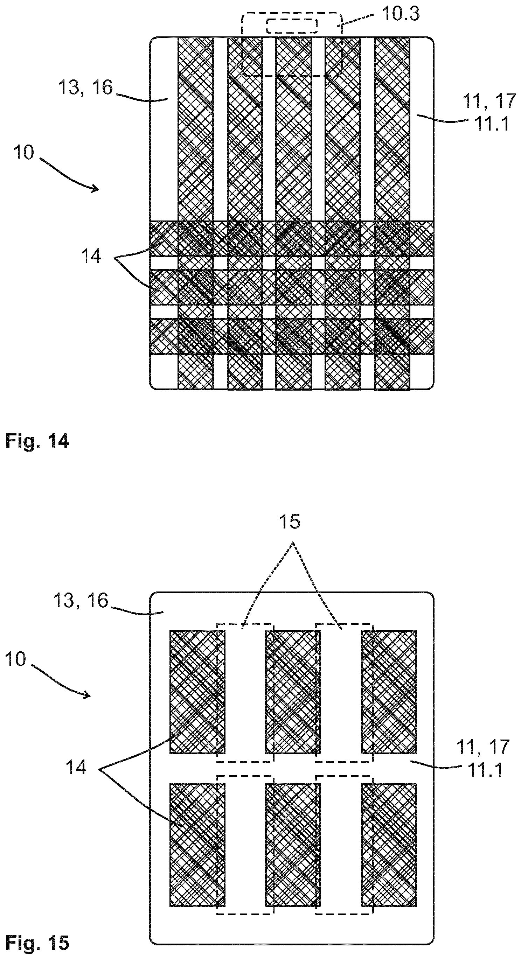

In den Figuren 14 und 15 ist schematisch eine Draufsicht auf die Frontwandung 17 der erfindungsgemäßen Säcke 10 dargestellt. Dabei ist der erfindungsgemäße Sack 10 optional mit einem Transportmittel 10.3 mit Griffelement am zweiten Ende 12.2 des erfindungsgemäßen Sacks 10 ausgestaltet. Dieses Transportmittel 10.3 ist zu diesem Zweck nur gestrichelt dargestellt, da es optional vorhanden sein kann. Dieses Transportmittel 10.3 kann stoffschlüssig und/oder formschlüssig mit der Frontwandung 17 verbunden sein. Zusätzlich ist das Packmittel, welches aus dem Schlauchstückbereich 12 gebildet wird, mit zumindest einer zweiten Lage ausgestaltet, die auf der ersten Lage, die insbesondere Vliesmaterial aufweist, versehen. Die zweite Lage ist dabei streifenförmig in Längs- und Querstreifen an der Frontwandung 17 angebracht, um somit den Schlauchstückbereich 12 entsprechend zu verstärken. Beim Material der zweiten Lage 14 kann es sich um Vlies, Papier, Folie, Film oder Gewebe handeln.

Als weiteres Beispiel ist in Figur 15 das Packmittel 11 mit einer bereichsweisen zweiten Lage 14 versehen, die bspw. rechteckförmig an den Frontwandungen 17 angeordnet sind. Wie in Figur 15 durch die Schraffierung angedeutet worden ist, können an der Innenwand 11.2 vom Packmittel 11 vergleichbare Verstärkungslagen 14 angeordnet sein. Diese können deckungsgleich mit der zweiten Lage 14 an der Außenwand 11.1 vom Packmittel 11 sein oder wie in Figur 15 gezeigt, weitestgehend versetzt dazu angeordnet sein.

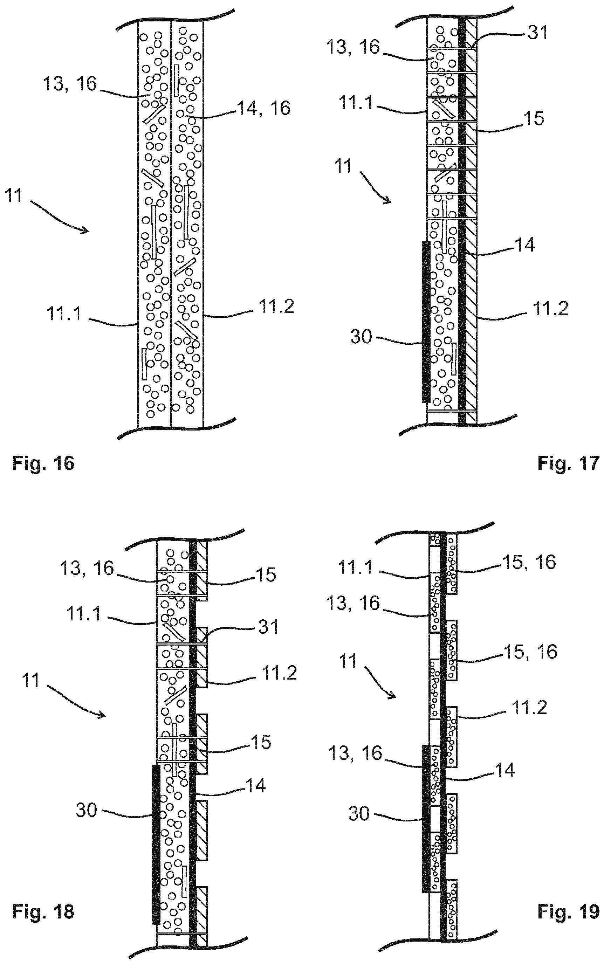

In den Figuren 16 bis 19 sind beispielhafte Längsschnitte durch die Seitenwandungen des Packmittels 11 dargestellt. Dabei weist das Packmittel 11 insgesamt zwei Lagen, nämlich eine erste Lage 13 und eine zweite Lage 14 auf, die beide Vliesmaterial 16 aufweisen. Diese beiden Lagen 13 und 14 sind stoffschlüssig ohne Zwischenschicht miteinander verbunden, z. B. durch Erhitzung oder Verschweißung oder dergleichen.

In Figur 17 kommt ein Packmittel 11 zum Einsatz, bei dem eine erste Lage 13 insbesondere aus Vlies durch eine zweite Lage 14, die als Zwischenlage für eine dritte Lage 15 dient, verbunden ist. Bei der zweiten Lage 14 kann es sich um eine Folie, eine Schrumpffolie, oder Heißfilmfolie, oder Klebepapier, oder eine Klebeschicht, handeln. Die dritte Lage kann bspw. aus einem gereckten Kreuzfoliengewebe bestehen. Wie zu erkennen ist, ist die erste Lage 13 als Außenwandung 11.1 versehen, an der im unteren Bereich bspw. ein Etikett 30 angeordnet ist. Dieses Etikett kann durch Drucktechnik aufgebracht sein, wobei das Etikett 30 teilweise in die Vlieslage 13 eingezogen ist. Zur äußeren Luftdurchlässigkeit der dargestellten Wandung des Packmittels 11 können Lüftungslöcher 31 in Form von Lüftungsperforationen vorgesehen sein.

Die Figur 18 unterscheidet sich von dem Ausführungsbeispiel aus Figur 17 durch eine unterschiedlich ausgestaltete dritte Lage 15, die nur bereichsweise oder streifenweise auf der Zwischenlage 14 angeordnet ist. Hierdurch wird deutlich, dass die dritte Lage 15 keineswegs vollständig, sondern vielmehr nur bereichsweise an der Zwischenlage 14 oder an der ersten Lage 13 angeordnet werden kann. Als dritte Lage 15 kann ebenfalls ein Gewebe, insbesondere ein Kunststoffgewebe real zum Einsatz kommen.

In der Figur 19 ist eine weitere Variante des Packmittels 11 dargestellt, wobei im Gegensatz zur Figur 18 auch die erste Lage 13 bereichsweise ausgestaltet ist. Hierbei ist die erste Lage 13 und die dritte Lage 15 jeweils aus Vliesmaterial 16 gebildet, die geometrisch versetzt zueinander als streifenförmiges Gebilde an der Zwischenlage, der zweiten Lage 14, angeordnet sind.

Die Beispiele aus den Figuren 16 bis 19 sollen nur verdeutlichen, dass es zahlreiche Varianten zum Einsatz des Vliesmaterials 16 bei dem erfindungsgemäßen Sack 10 gibt.

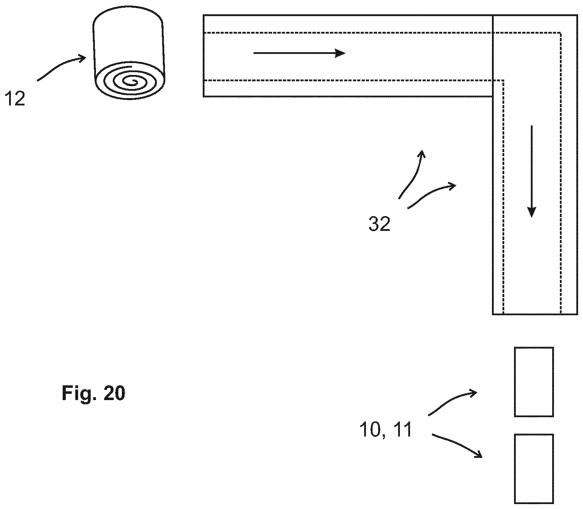

In der Figur 20 ist rein schematisch eine Anlage 32 zur Herstellung der erfindungsgemäßen Säcke 10 dargestellt. Dabei können am Anfang die Schlauchstückbereiche 12 als Wickel in die Anlage eingeführt werden. Dabei werden die einzelnen Schlauchstückbereiche 12 auf die entsprechend gewünschte Länge gekürzt, wobei ein Staffelschnitt oder ein Gradschnitt, je nach Ausgestaltung des gewünschten Endes 12.1 und 12.2, zum Einsatz kommen kann. Die Transportrichtung des Schlauchstückbereichs 12 innerhalb der Anlage 32 ist durch die beiden Pfeile angezeigt, wobei deutlich wird, dass sich die Transportrichtung um 90° innerhalb der Anlage 32 ändert. Innerhalb der Anlage 32 findet dann eine Anformung der Rollböden 22 oder Kastenböden 25 statt, um die erfindungsgemäßen Säcke 10 herzustellen. Dabei können beide Enden 12.1 und 12.2 des Schlauchstückbereichs 12 zur Herstellung des Sacks 10 ausgebildet werden.

### Bezugszeichenliste

- 10: Sack
- 10.1: Seitenfaltsack
- 10.2: Kastensack
- 10.3: Transportmittel mit Griffelement
- 11: Packmittel
- 11.1: Außenwand
- 11.2: Innenwand
- 12: Schlauchstückbereich
- 12.1: erstes Ende
- 12.2: zweites Ende
- 12.3: schlauchartiges Rundmaterial
- 12.4: zum Schlauch geformtes Flachmaterial
- 12.5: Längsnaht
- 13: erste Lage, insbesondere aus Vlies
- 14: zweite Lage, insbesondere aus Vlies, Papier, Folie, Film oder Gewebe
- 15: dritte Lage, insbesondere aus Vlies, Papier, Folie, Film oder Gewebe
- 16: Vliesmaterial
- 16.1: Faser
- 16.2: Kombifaser
- 17: Frontwandung
- 18: Seitenwandung
- 19: Seitenfalte
- 20: Längserstreckung von 12
- 21: Querfaltung bzw. Querrollung
- 22: Rollboden
- 23: rechteckförmiger Lappen
- 24: Trapezförmiger Lappen
- 25: Kastenboden
- 26: Verstärkungszettel
- 27: Einfüllventil
- 28: Ventilzettel
- 29: Bodenleger
- 30: Etikett
- 31: Lüftungslöcher, Lüftungsperforation
- 32: Anlage

## Patentansprüche

1. Sack (10) zum Portionieren, Schützen, Lagern, und/oder Transportieren von wenigstens einem Packgut, mit
zumindest einem Packmittel (11) aus Packstoff, das dazu dient, das Packgut zu umschließen und/oder zusammenzuhalten,
wobei das Packmittel (11) zumindest einlagig ist und einen Schlauchstückbereich (12) mit einer Längserstreckung (20) aufweist, und
das Packmittel (11) eine Innenwand (11.2) und eine Außenwand (11.1) aufweist, wobei die Innenwand (11.2) zum Packgut hin gerichtet ist und die Außenwand (11.1) vom Packgut weg gerichtet ist, und
einem ersten Ende (12.1) am Schlauchstückbereich (12), welches als Bodenbereich des Sacks (10) ausgeformt ist, und
einem zweiten Ende (12.2) am Schlauchstückbereich (12), welches dem ersten Ende (12.1) gegenüberliegend am Schlauchstückbereich (12) angeordnet ist und als Kopfbereich ausgestaltet ist,
wobei zumindest eine Lage (13, 14, 15) des Packmittels (11) wenigstens teilweise Vliesmaterial (16) aufweist,
**dadurch gekennzeichnet,**
**dass** wenigstens an einem Ende (12.1, 12.2) am Schlauchstückbereich (12) zwei oder mehr Querfaltungen oder Querrollungen (21) vorgesehen sind, wobei zumindest ein Verstärkungszettel (26) zum Einsatz kommt, der an dem Ende (12.1, 12.2) *mit den Querfaltungen oder Querrollungen (21) am Schlauchstückbereich (12) befestigt ist und* eine Stabilisierung erzielt, wobei der Verstärkungszettel (26) luftdurchlässig ausgestaltet ist.

2. Sack (10) nach Anspruch 1,
**dadurch gekennzeichnet,**
**dass** der Schlauchstückbereich (12) aus schlauchartigem Rundmaterial (12.3) besteht oder ein zu einem Schlauch verbundenes Flachmaterial (12.4), insbesondere mit einer Längsnaht (12.5), aufweist,
wobei insbesondere die Dicke der Längsnaht (12.5) der Dicke des Flachmaterials (12.4) entspricht und/oder
**dass** der Schlauchstückbereich (12) derart durch Kanten in der Längserstreckung (20) geformt ist, dass zwei Frontwandungen (17) und zumindest zwei Seitenwandungen (18) gebildet sind,
wobei die Seitenwandungen (18) zwischen den Frontwandungen (17) angeordnet sind, und
wobei eine Seitenwandung (18) wenigstens eine Seitenfalte (19) in der Längserstreckung (20) aufweist, die mit einer Tiefe (A), insbesondere von den Seitenwandungen (18), eingelegt ist,
und aus dem ausgeformten Schlauchstückbereich (12) ein Seitenfaltsack (10.1) gebildet ist.

3. Sack (10) nach einem der vorhergehenden Ansprüche,
**dadurch gekennzeichnet,**
**dass** der Schlauchstückbereich (12) derart durch Kanten in der Längserstreckung (20) geformt ist, dass zwei Frontwandungen (17) und zumindest zwei Seitenwandungen (18) gebildet sind,
wobei die Seitenwandungen (18) zwischen den Frontwandungen (17) angeordnet sind, und
die Seitenwandungen (18) am anderen Ende (12.1, 12.2) am Schlauchstückbereich (12) quer zur Längserstreckung (20) in das Schlauchstück, insbesondere als rechteckförmige Lappen (23), eingefaltet sind und sich bei den Frontwandungen (17) dadurch insbesondere trapezförmige Lappen (24) bilden, die ebenfalls quer zur Längserstreckung (20) in das Schlauchstück eingefaltet sind,
wodurch insbesondere ein Kreuzboden gebildet ist.

4. Sack (10) nach einem der vorhergehenden Ansprüche,
**dadurch gekennzeichnet,**
**dass** am anderen Ende (12.1, 12.2) am Schlauchstückbereich (12) ein Einfüllventil (27) angeordnet ist, um das Packgut einfüllen zu können,
wobei insbesondere das Einfüllventil (27) durch Faltung und/oder Rollung des Endes (12.1, 12.2) herstellbar ist, und
wobei insbesondere ein Ventilzettel (28) zum Einsatz kommt, um das Ventil zu bilden.

5. Sack (10) nach einem der vorhergehenden Ansprüche,
**dadurch gekennzeichnet,**
**dass** der Sack (10) ein Vliesmaterial (16) mit einer Kombination von Naturfasern und Kunstfasern, insbesondere aus Kunststoff, aufweist und/oder
**dass** der Sack (10) ein Vliesmaterial (16) mit einer Kombifaser (16.2) aufweist, wobei die Kombifaser (16.2) selbst zumindest zwei Materialien aufweist,
wobei insbesondere zwei Materialien der Kombifaser (16.2) axial zueinander anordbar sind.

6. Sack (10) nach einem der vorhergehenden Ansprüche,
**dadurch gekennzeichnet,**
**dass** der Sack (10) ein Vliesmaterial (16) mit einer maximalen Faserlänge einer Faser (16.1) von unter 100 cm, vorzugsweise unter 80 cm, besonders bevorzugt von unter 40 cm aufweist und/oder einer maximalen Faserdicke einer Faser (16.1) von unter 3 mm, vorzugsweise unter 1 mm, besonders bevorzugt von unter 0,5 mm aufweist und/oder dass der Sack (10) ein Vliesmaterial (16) mit Fasern (16.1) aufweist, wobei die Fasern (16.1) hauptsächlich in eine Richtung hin ausgerichtet sind oder die Fasern (16.1) hauptsächlich in zwei querzueinander liegende Richtungen hin ausgerichtet sind und/oder
**dass** der Sack (10) ein Vliesmaterial (16) mit Fasern (16.1) aufweist, wobei die Fasern (16.1) teilweise stoffschlüssig miteinander verbunden sind, und
das Vliesmaterial (16) mit einem Durchdringungsmittel getränkt ist, wodurch zumindest teilweise Zwischenräume zwischen den Fasern (16.1) verschließbar sind,
wobei insbesondere das Durchdringungsmittel wasserunlöslich ist.

7. Sack (10) nach einem der vorhergehenden Ansprüche,
**dadurch gekennzeichnet,**
**dass** der Sack (10) ein Vliesmaterial (16) mit einer Vliesfaser (16.1) aufweist, wobei die Vliesfaser (16.1) ein Zug-E-Modul zwischen 800 und 12.000 MPa nach ISO 527, bevorzugt zwischen 1.200 und 10.000 MPa nach ISO 527 aufweist und/oder dass bei dem Vliesmaterial (16) zumindest Füllstoffe oder Additive, insbesondere in den Vliesfasern (16.1), vorhanden sind,
wobei insbesondere die Füllstoffe die physikalischen und/oder chemischen Eigenschaften des Vliesmaterials (16) nicht beeinflussen, wobei die Füllstoffe insbesondere wenigstens eines der folgenden Bestandteile aufweisen: Kalk, Kaolin, Talkum, Kreide, Schiefermehl, Glimmerpulver und Schwerspat; und
wobei insbesondere die Additive die physikalischen und/oder chemischen Eigenschaften des Vliesmaterials (16) verbessern und wenigstens einen der folgenden Stoffe aufweisen: Farbstoffe, Farbpigmente, UV-Stabilisatoren, Temperatur-Stabilisatoren, Flammenschutzmittel, Weichmacher und Riechstoffe.

8. Sack (10) nach einem der vorhergehenden Ansprüche,
**dadurch gekennzeichnet,**
**dass** ein Bodenleger (29) innerhalb des Sacks (10) an wenigstens einem Ende (12.1, 12.2) zum Einsatz kommt,
wobei insbesondere der Bodenleger (29) Lüftungsperforationen (31) aufweist und/oder dass zumindest ein Etikett (30) auf der Außenwand (11.1) sichtbar angeordnet ist, wobei auf dem Etikett (30) Informationen zum Packgut anführbar sind, und
wobei insbesondere das Etikett (30) Lüftungsperforationen (31) aufweist.

9. Sack (10) nach einem der vorhergehenden Ansprüche,
**dadurch gekennzeichnet,**
**dass** als Packgut zumindest eines der folgenden Güter vorhanden ist: Nahrungsmittel, Baustoffe, Dünger, Saatgut, Pflanzenschutzmittel, Kunststoffe,
wobei insbesondere das Packgut ein Gewicht von 10, 25, 50, 75 bzw. 100 kg aufweist.

10. Sack (10) nach einem der vorhergehenden Ansprüche,
**dadurch gekennzeichnet,**
**dass** der Sack (10) eine Wasseraufnahme von weniger als 45%, vorzugsweise weniger als 25%, besonders bevorzugt weniger als 15 % aufweist und/oder dass zumindest eine Wand, insbesondere eine Frontwandung (17), des Sacks (10) direkt bedruckt ist, wodurch zumindest eine teilweise Druckbeschichtung vorhanden ist,
wobei insbesondere der obere Sackbereich bedruckungsfrei ausgestaltet ist.

11. Sack (10) nach einem der vorhergehenden Ansprüche,
**dadurch gekennzeichnet,**
**dass** zumindest eine weitere Lage (13, 14, 15) des Packmittels (11) Gewebe aus Natur und/oder Kunstfasern, Papier oder Folie aufweist,
wobei insbesondere eine Kombination der zuvor genannten Lagen (13, 14, 15) möglich ist und/oder
**dass** zumindest eine weitere Lage (13, 14, 15) zur Vlieslage nur bereichsweise, insbesondere streifenweise, punktuell oder abschnittsweise, vorgesehen ist.

12. Verfahren zur Herstellung eines Sacks (10) nach einem der vorhergehenden Ansprüche aus einem Schlauchstückbereich (12), wobei
durch eine Ausgestaltung der Enden (12.1, 12.2) des Schlauchstückbereichs (12) der Sack (10) hergestellt wird.

## Claims

1. A bag (10) for portioning, protecting, storing and/or transporting at least one packaged product, having at least one packaging means (11) made of packing material, which serves to enclose and/or to hold together the packaged product,
wherein the packaging means (11) is at least single-layered and has a tube piece region (12) with a longitudinal extent (20), and
the packaging means (11) has an inner wall (11.2) and an outer wall (11.1), wherein the inner wall (11.2) is directed towards the packaged product, and the outer wall (11.1) is directed away from the packaged product, and
having a first end (12.1) on the tube piece region (12), which is formed as the bottom region of the bag (10), and
having a second end (12.2) on the tube piece region (12), which is arranged on the tube piece region (12) opposite the first end (12.1) and is configured in the form of a head region,
wherein at least one layer (13, 14, 15) of the packaging means (11) has at least partially nonwoven material (16),
**characterized in**
**that** at least two or more transverse folds or transverse rolls (21) are provided at an end (12.1, 12.2) on the tube piece region (12), wherein at least one reinforcement slip of paper (26) is used, which at the end (12.1, 12.2) is fastened *with the transverse folds or transverse rolls (21) on the tube piece region (12)* and achieves a stabilization, wherein the reinforcement slip of paper (26) is designed to be permeable to air.

2. The bag (10) according to claim 1,
**characterized in**
**that** the tube piece region (12) consists of tube-like round material (12.3) or has a flat material (12.4) connected to a tube, in particular, with a longitudinal seam (12.5),
wherein, in particular, the thickness of the longitudinal seam (12.5) corresponds to the thickness of the flat material (12.4) and/or
**that** the tube piece region (12) is formed by edges in the longitudinal extent (20) in such a manner that two front walls (17) and at least two side walls (18) are formed, wherein the side walls (18) are arranged between the front walls (17),
and
wherein a side wall (18) has at least one side fold (19) in the longitudinal extent (20), which is inserted at a depth (A), in particular from the side walls (18),
and a side fold bag (10.1) is formed from the shaped tube piece region (12).

3. The bag (10) according to any one of the preceding claims,
**characterized in**
**that** the tube piece region (12) is formed by edges in the longitudinal extent (20) in such a manner that two front walls (17) and at least two side walls (18) are formed, wherein the side walls (18) are arranged between the front walls (17), and
the side walls (18) are folded into the tube piece, at the other end (12.1, 12.2) on the tube piece region (12) transversely to the longitudinal extent (20), in particular ,as rectangular tabs (23), and in the case of the front walls (17), in particular, trapezoidal tabs (24) are thus formed, which are also folded into the tube piece transversely to the longitudinal extent (20),
as a result of which, in particular, a cross bottom is formed.

4. The bag (10) according to any one of the preceding claims,
**characterized in**
**that** at the other end (12.1, 12.2) on the tube piece region (12) a filling valve (27) is arranged, in order to be able to fill in the packaged product,
wherein, in particular, the filling valve (27) can be produced by folding and/or rolling the end (12.1, 12.2), and
wherein, in particular, a valve slip of paper (28) is used, in order to form the valve.

5. The bag (10) according to any one of the preceding claims,
**characterized in**
**that** the bag (10) has a nonwoven material (16) with a combination of natural fibers and synthetic fibers, in particular, made of plastic, and/or
**that** the bag (10) has a nonwoven material (16) with a combi-fiber (16.2), wherein the combi-fiber (16.2) itself has at least two materials,
wherein, in particular, two materials of the combi-fiber (16.2) can be arranged axially to one another.

6. The bag (10) according to any one of the preceding claims,
**characterized in**
**that** the bag (10) has a nonwoven material (16) with a maximum fiber length of a fiber (16.1) of less than 100 cm, preferably less than 80 cm, particularly preferably of less than 40 cm and/or a maximum fiber thickness of a fiber (16.1) of less than 3 mm, preferably less than 1 mm, particularly preferably of less than 0.5 mm and/or that the bag (10) has a nonwoven material (16) with fibers (16.1), wherein the fibers (16.1) are oriented primarily in one direction or the fibers (16.1) are primarily oriented in two directions transverse to one another.
and/or
**that** the bag (10) has a nonwoven material (16) with fibers (16.1), wherein the fibers (16.1) are partially integrally connected to one another, and
the nonwoven material (16) is impregnated with a penetration agent, as a result of which at least partial intermediate spaces between the fibers (16.1) can be closed, wherein, in particular, the penetration agent is water-insoluble.

7. The bag (10) according to any one of the preceding claims,
**characterized in**
**that** the bag (10) has a nonwoven material (16) with a nonwoven fiber (16.1), wherein the nonwoven fiber (16.1) has a tensile modulus of elasticity between 800 and 12,000 MPa according to ISO 527, preferably between 1,200 and 10,000 MPa according to ISO 527 and/or
**that** in the case of the nonwoven material (16) at least fillers or additives are present, in particular, in the nonwoven fibers (16.1),
wherein, in particular, the fillers do not influence the physical and/or chemical properties of the nonwoven material (16), wherein the fillers have, in particular, at least one of the following components: lime, kaolin, talc, chalk, slate powder, mica powder and barite; and
wherein, in particular, the additives improve the physical and/or chemical properties of the nonwoven material (16) and have at least one of the following substances: dyes, color pigments, UV stabilizers, temperature stabilizers, flame retardants, plasticizers and fragrances.

8. The bag (10) according to any one of the preceding claims,
**characterized in**
**that** the bottom layer (29) is used within the bag (10) on at least one end (12.1, 12.2), wherein, in particular, the bottom layer (29) has ventilation perforations (31) and/or that at least one label (30) is visibly arranged on the outer wall (11.1), wherein information on the packaged product can be conveyed on the label (30), and wherein, in particular, the label (30) has ventilation perforations (31).

9. The bag (10) according to any one of the preceding claims,
**characterized in**
**that** at least one of the following items is present as a packaged product: foodstuffs, building materials, fertilizers, seeds, plant protection agents, plastics, wherein, in particular, the packaged product has a weight of 10, 25, 50, 75 or 100 kg.

10. The bag (10) according to any one of the preceding claims,
**characterized in**
**that** the bag (10) as an absorption of water of less than 45%, preferably less than 25%, particularly preferably less than 15% and/or
**that** at least one wall, in particular, a front wall (17) of the bag (10) is directly printed on, as a result of which at least one partial print coating is present, wherein, in particular, the upper bag region is designed to be without printing.

11. The bag (10) according to any one of the preceding claims,
**characterized in**
**that** at least one further layer (13, 14, 15) of the packaging means (11) has woven fabric of natural and/or synthetic fibers, paper or film,
wherein, in particular, a combination of the previously mentioned layers (13, 14, 15) is possible and/or
**that** at least one further layer (13, 14, 15) is provided for the nonwoven layer only in some areas, in particular, strip-wise, point-wise or section-wise.

12. A method for producing a bag (10) according to any one of the preceding claims from a tube piece region (12), wherein
the bag (10) is produced by means of a configuration of the ends (12.1, 12.2) of the tube piece region (12).

## Revendications

1. Sac (10) pour le fractionnement, la protection, le stockage et/ou le transport d'au moins un produit à emballer, avec
au moins un moyen d'emballage (11) constitué d'une matière d'emballage qui sert à entourer et/ou à contenir le produit à emballer,
dans lequel le moyen d'emballage (11) est au moins monocouche et comprend une partie en forme de gaine (12) avec une extension longitudinale (20) et
le moyen d'emballage (11) comprend une paroi interne (11.2) et une paroi externe (11.1), la paroi interne (11.2) étant orientée vers le produit à emballer et la paroi externe (11.1) étant orientée loin du produit à emballer et
une première extrémité (12.1) au niveau de la partie en forme de gaine (12), qui est formée comme une partie de fond du sac (10) et
une deuxième extrémité (12.2) au niveau de la partie en forme de gaine (12), qui est disposée en face de la première extrémité (12.1) sur la partie en forme de gaine (12) et est conçue comme une partie de tête,
dans lequel au moins une couche (13, 14, 15) du moyen d'emballage (11) comprend au moins partiellement un matériau non tissé (16),
**caractérisé en ce que**
au moins à une extrémité (12.1, 12.2) de la partie en forme de gaine (12) sont prévus deux pliages transversaux ou deux roulages transversaux (21) ou plus, au moins une feuille de renfort (26) étant utilisée, qui est fixée à l'extrémité (12.1, 12.2) avec les pliages transversaux ou roulages transversaux (21) sur la partie en forme de gaine (12) et qui permet d'obtenir une stabilisation, la feuille de renfort (26) étant conçue de manière perméable à l'air.

2. Sac (10) selon la revendication 1,
**caractérisé en ce que**
la partie en forme de gaine (12) est constituée d'un matériau rond de type gaine (12.3) ou d'un matériau plat (12.4) relié en forme de gaine, plus particulièrement avec un cordon longitudinal (12.5),
dans lequel, plus particulièrement, l'épaisseur du cordon longitudinal (12.5) correspond à l'épaisseur du matériau plat (12.4) et/ou
**en ce que** la partie en forme de gaine (12) est formée par des arêtes dans l'extension longitudinale (20) de façon à ce que deux parois frontales (17) et au moins deux parois latérales (18) soient formées,
dans lequel les parois latérales (18) sont disposées entre les parois frontales (17) et
dans lequel une paroi latérale (18) comprend au moins un pli latéral (19) dans l'extension longitudinale (20), qui est insérée avec une profondeur (A), plus particulièrement à partir des parois latérales (18),
et, à partir de la partie en forme de gaine (12), un sac à pli latéral (10.1) est formé.

3. Sac (10) selon l'une des revendications précédentes,
**caractérisé en ce que**
la partie en forme de gaine (12) est formée par des arêtes dans l'extension longitudinale (20) de façon à ce que deux parois frontales (17) et au moins deux parois latérales (18) soient formées,
dans lequel les parois latérales (18) sont disposées entre les parois frontales (17) et
les parois latérales (18) sont repliées, au niveau de l'autre extrémité (12.1, 12.2) sur la partie en forme de gaine (12) transversalement par rapport à l'extension longitudinale (20) dans la gaine, plus particulièrement sous la forme de rabats rectangulaires (23) et, au niveau des parois frontales (17) se forment ainsi plus particulièrement des rabats trapézoïdaux (24) qui sont repliés également transversalement par rapport à l'extension longitudinale (20) dans la gaine,
ce qui permet de former plus particulièrement un fond croisé.

4. Sac (10) selon l'une des revendications précédentes,
**caractérisé en ce que**
à l'autre extrémité (12.1, 12.2) sur la partie en forme de gaine (12) est disposée une soupape de remplissage (27) afin de pouvoir remplir introduire le produit à emballer,
dans lequel, plus particulièrement, la soupape de remplissage (27) peut être créée par pliage et/ou roulage de l'extrémité (12.1, 12.2) et
dans lequel, plus particulièrement, une feuille de soupape (28) est utilisée pour former la soupape.

5. Sac (10) selon l'une des revendications précédentes,
**caractérisé en ce que**
le sac (10) comprend un matériau non tissé (16) avec une combinaison de fibres naturelles et de fibres artificielles, plus particulièrement en matière plastique et/ou
le sac (10) comprend un matériau non tissé (16) avec une fibre combinée (16.2), la fibre combinée (16.2) comprenant elle-même au moins deux matériaux,
dans lequel, plus particulièrement, deux matériaux de la fibre combinées (16.2) peuvent être disposés de manière axiale entre eux.

6. Sac (10) selon l'une des revendications précédentes,
**caractérisé en ce que**
le sac (10) comprend un matériau non tissé (16) avec une longueur de fibre d'une fibre (16.1) inférieure à 100 cm, de préférence inférieure à 80 cm, plus particulièrement de préférence inférieure à 40 cm et/ou une épaisseur de fibre maximale d'une fibre (16.1) inférieure à 3 mm, de préférence inférieure à 1 mm, plus particulièrement de préférence inférieure à 0,5 mm et/ou
le sac (10) comprend un matériau non tissé (16) avec des fibres (16.1), les fibres (16.1) étant principalement orientées dans une direction ou les fibres (16.1) étant orientées principalement dans deux directions transversales entre elles et/ou
le sac (10) comprend un matériau non tissé (16) avec des fibres (16.1), les fibres (16.1) étant reliées entre elles partiellement par liaison de matière et
le matériau non tissé (16) est imprégné d'un agent de pénétration, ce qui permet de fermer au moins partiellement des espaces intermédiaires entre les fibres (16.1),
dans lequel, plus particulièrement, l'agent de pénétration est insoluble dans l'eau.

7. Sac (10) selon l'une des revendications précédentes,
**caractérisé en ce que**
le sac (10) comprend un matériau non tissé (16) avec une fibre de non-tissé (16.1), la fibre de non-tissé (16.1) présentant un module d'élasticité à la traction entre 800 et 12000 MPa selon ISO 527, de préférence entre 1200 et 10000 MPa selon ISO 527 et/ou
dans le matériau non tissé (16), sont présents au moins des charges ou des additifs, plus particulièrement dans les fibres de non-tissé (16.1),
dans lequel, plus particulièrement, les charges n'influencent pas les propriétés physiques et/ou chimiques du matériau non tissé (16), les charges comprenant plus particulièrement au moins un des composants suivants : calcaire, kaolin, talc, craie, poudre de schiste, poudre de mica et baryte ; et
dans lequel, plus particulièrement, les additifs améliorent les propriétés physiques et/ou chimiques du matériau non tissé (16) et comprennent au moins une des substances suivantes : colorants, pigments colorés, stabilisateurs UV, stabilisateurs de température, ignifugeants, plastifiants et parfums.

8. Sac (10) selon l'une des revendications précédentes,
**caractérisé en ce que**
un dispositif de pose de fond (29) est utilisé à l'intérieur du sac (10) au niveau d'au moins une extrémité (12.1, 12.2),
dans lequel, plus particulièrement, le dispositif de pose de fond (29) comprend des perforations de ventilation (31) et/ou
**en ce qu'**au moins une étiquette (30) est disposée de manière visible sur la paroi externe (11.1), des informations concernant le produit à emballer pouvant être indiquées sur l'étiquette (30) et
dans lequel, plus particulièrement, l'étiquette (30) comprend des perforations de ventilation (31).

9. Sac (10) selon l'une des revendications précédentes,
**caractérisé en ce que**
en tant que produit à emballer, un des produits suivants est présent : aliments, matériaux de construction, engrais, semences, produits phytosanitaires, matières plastiques,
dans lequel, plus particulièrement, le produit à emballer présente un poids de 10, 25, 50, 75 resp. 100 kg.

10. Sac (10) selon l'une des revendications précédentes,
**caractérisé en ce que**
le sac (10) présente une absorption d'eau inférieure à 45 %, de préférence inférieure à 25 %, plus particulièrement de préférence inférieure à 15 % et/ou
**en ce qu'**au moins une paroi, plus particulièrement une paroi frontale (17), du sac (10), est imprimée directement, ce qui fait qu'au moins un revêtement d'impression partiel est présent,
dans lequel, plus particulièrement, la partie supérieure du sac est conçue de façonà être exempte d'impression.

11. Sac (10) selon l'une des revendications précédentes,
**caractérisé en ce que**
au moins une autre couche (13, 14, 15) du produit à emballer (11) comprend un tissu constitué de fibres naturelles et/ou artificielles, du papier ou un film
dans lequel, plus particulièrement, une combinaison des couches (13, 14, 15) mentionnées ci-dessus est possible et/ou
**en ce qu'**au moins une autre couche (13, 14, 15) est prévue en plus de la couche de matériau non tissé, uniquement à certains endroits, plus particulièrement par bandes, de manière ponctuelle ou sur certaines parties.

12. Procédé de fabrication d'un sac (10) selon l'une des revendications précédentes, à partir d'une partie en forme de gaine (12), dans lequel
le sac (10) est fabriqué par un formage des extrémités (12.1, 12.2) de la partie en forme de gaine (12).
